# EUROPEAN PATENT APPLICATION

(11) **EP 1 701 543 A1**
(43) Date of publication of application: **13.09.2006**
(21) Application number: 04808027.9
(22) Date of filing: 21.12.2004
(51) Int. Cl.: H04N 5/92, G11B 27/034

(54) **FILE RECORDING DEVICE, FILE RECORDING METHOD, FILE RECORDING METHOD PROGRAM, RECORDING MEDIUM CONTAINING PROGRAM OF FILE RECORDING METHOD, FILE REPRODUCTION DEVICE, FILE REPRODUCTION METHOD, FILE REPRODUCTION METHOD PROGRAM, AND RECORDING MEDIUM CONTAINING FILE REPRODUCTION METHOD PROGRAM**

(30) Priority: 29.12.2003 JP 2003437012
(71) Applicant: SONY CORPORATION, Tokyo 141-0001 (JP)
(72) Inventor: TSUJII, Satoshi, Sony Corporation, Tokyo 1410001 (JP); HIRABAYASHI, Mitsuhiro, Sony Corporation, Tokyo 1410001 (JP); KAWATE, Fumitaka, Sony Corporation, Tokyo 1410001 (JP)
(74) Representative: Davies, Simon Robert
(86) International application number: PCT/JP2004/019676
(87) International publication number: WO 2005/064935

(57) **Abstract**

The present invention is applicable when video data obtained by taking a movie picture is recorded as a file in a QT format or the like, and the file is edited. At least an alternate track AT2 including video data is formed, and the processing priority for the alternate track AT2 is defined.

## Description

### Background of the Invention

### Technical Field

The present invention relates to a file recording apparatus, a file recording method, a program of a file recording process, a storage medium in which a program of a file recording process is stored, a file playback apparatus, a file playback method, a program of a file playback process, and a storage medium in which a program of a file playback process, which are applicable when a file in a QT format or the like, in which a video data obtained by taking a moving picture is recorded, is edited. According to the present invention, an alternate track including video data is formed, and the processing priority level for the alternate track is defined thereby making it possible to provide to a user the result of an effect process for an edited file in a QT format or the like even when an apparatus used does not have the capability of processing the effect.

### Background Art

A Quick Time file format (hereinafter, referred to simply as a "QT format") is widely used as a file format to store multimedia data.

In the QT format, real data of a moving image, a still image, and a sound are stored in the form of a collection of blocks, and management information for managing the real data is stored in the form of a collection of blocks separately from the collection of blocks of the real data. Hereinafter, such blocks will be referred to as atoms. An atom of real data is referred to as a movie data atom. An atom of management information is referred to as a movie atom.

The movie atom includes various kinds of atoms organized in a hierarchical form according to properties. That is, management information associated with each property is described in a box, and boxes of various levels are hierarchically organized in a single movie atom. In the movie atom, tracks are formed of hierarchical atoms of management information corresponding to respective types of real data. More specifically, when media data are video data and sound data, a video track and an audio track are formed in the movie atom whereby the real data of each type in the movie data atom is managed by the corresponding track. In the video track, not only video data of a moving picture but also image data of a still image is managed. For example, in data in which video data and audio data are multiplexed as in MPEG2-PS (Program Stream) data, a track assigned to describe management information thereof is not classified as a video track but classified as a base media track. However, regardless of which class the track is classified, if the track is assigned to manage video data, the track can be used to edit the corresponding real data. Thus, hereinafter, the term "video track" is used to describe a track for managing real data including video data. In this sense, in the following discussion, the base media track is regarded as a video track. To describe a track assigned to manage data including only video data but not including sound data, the track will be explicitly denoted as the "track associated with video".

In management of real data, it is possible to manage not only a movie data atom stored together with a movie atom but also a movie data atom separately stored in an external file. That is, various kinds of media can be provided in either a form in which a movie atom refers to an internal movie data atom or in a form in which a movie atom refers to an external movie data atom.

In the movie data atom, real data is divided into samples which are minimum management units. In the QT format, management information associated with each minimum management unit of real data is described in the movie atom. When a file is produced in the QT format, for convenience of processing, as disclosed, for example, in Japanese Unexamined Patent Application Publication No. 2001-94933, samples are generally formed such that one sample includes one frame or one GOP (Group Of Picture) which is a unit used in displaying the real data.

In editing, when an effect is applied to video data in the QT format, video data obtained as a result of applying the effect is stored in a movie data atom, and a movie atom corresponding to this video data is described in a video track, thereby forming a file in which the editing is reflected.

In the QT format, instead of storing a movie data atom obtained as a result of editing including applying of an effect, it is also allowed to applying an effect to original video data stored in the movie data atom when the video data is played back. When video data is edited in such a manner, an effect track in which management information associated with editing is formed in the movie atom, and the movie data atom of the original video data is applied as an input source to the effect track.

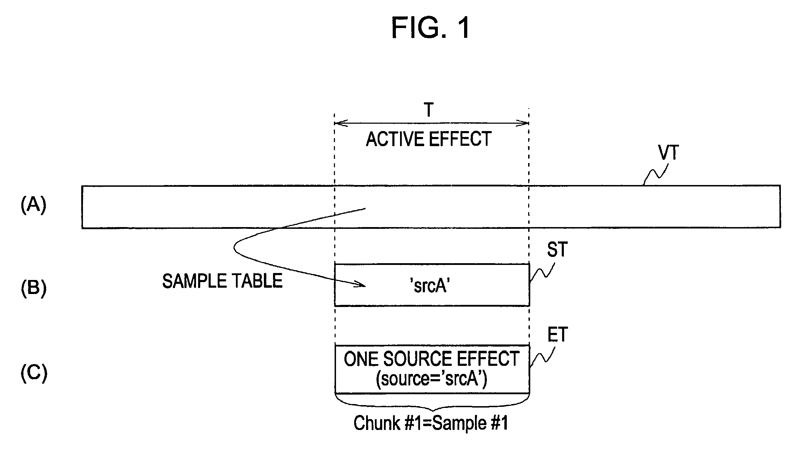

That is, as shown in Fig. 1, in such an editing process, for example, when an effect such as filtering is applied in a one source effect mode to a particular period T of a streaming of one video data, a source track ST identifying the real data of this period T is produced (Fig. 1(B)) in accordance with management information (management information based on a sample table described later) associated with the video track VT (Fig. 1(A)) corresponding to the real data of the original video data. Furthermore, an effect track ET in which the specific process associated with the effect to be applied to the source track ST is produced (Fig. 1(C)).

In this case, in the QT file, the real data corresponding to the original video track, that is, the video track VT is sequentially played back. In parallel with the playback according to the original track, the real data identified by the source track ST is processed during the period T according to the effect track ET while sequentially playing back the real data. The video data processed according to the effect track ET is output in preference to the video data according to the video track VT. Thus, in the one source effect mode, three tracks are handled to perform the editing associated with the filtering. Note that in Fig. 1, srcA is a name identifying the source.

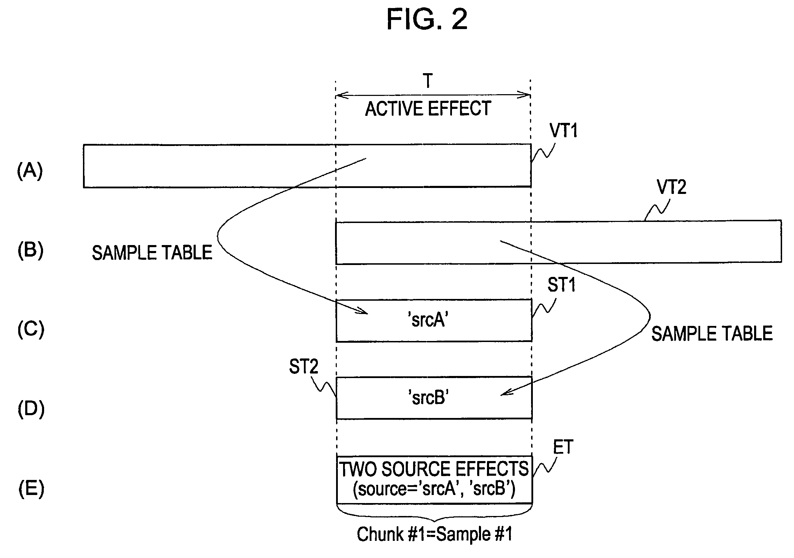

On the other hand, as shown in Fig. 2, when editing is performed, for example, in a two source effect mode such that a transition effect such as cross fading is applied to streamings of two video data, video tracks VT1 and VT2 corresponding to the real data of the two video data are formed as original tracks (Figs. 2(A) and 2(B)), and source tracks ST1 and ST2 associated with the effect in the period T are produced according to the management information associated with the two video tracks VT1 and VT2 (Figs. 2(C) and 2(D)). Furthermore, an effect track ET (Fig. 2(E)) is produced to define the specific process associated with the effect to be applied to the video data identified by the source tracks ST1 and ST2.

In this case, in the QT file, the real data corresponding to the original tracks, that is, the video tracks VT1 and VT2 are sequentially played back. In parallel with the playback according to the original tracks, the real data identified by the source tracks ST1 and ST2 are processed during the period T according to the effect track ET while sequentially playing back the real data. The video data processed according to the effect track ET is output in preference to the video data according to the video tracks VT1 and VT2. Thus, in the two source effect mode, five tracks are handled in the transition editing process.

In the QT format, the effect track for use in the editing process is processed separately for management information and real data. More specifically, types of effects such as a chromakey effect used in editing of a file are described in the effect track in the order in which effects occur. On the other hand, in the movie data atom, parameters associated with respective effects are described. That is, in the QT format, the effect track is organized in units of samples for each effect type and for each parameter value associated with each effect.

In the QT file, in some cases, a new type of effect is added when the version is upgraded. However, there is a possibility that the new type of effect cannot be processed by processing programs of old versions. In such a case, it becomes possible to process the new type of effect in the QT file by upgrading the processing program.

By applying a QT format to consumer video devices, it becomes possible to provide video devices having an affinity for computers. For example, if video data obtained by taking a movie picture is recorded in a QT file, it is possible to easily process the video data by using a computer. Conversely, video data or audio data processed using a computer can be played back using a consumer video device.

In computers, as described above, when an effect which is difficult to process occurs, it becomes possible to process the effect if the processing program is upgraded. However, it is very difficult to update processing programs installed on consumer devices, and thus there is a possibility that consumer devices encounter a difficulty in processing effects.

In consumer devices, there is a possibility that an original effect is added, which cannot be correctly processed by a computer.

It is desirable to provide the result of any effect process to users regardless of difference in processing capability among devices or computers.

### Disclosure of Invention

In view of the above, the present invention provides a file recording apparatus, a file recording method, a program of file recording process, a storage medium in which a program of file recording process is stored, a file playback apparatus, a file playback method, a program of file playback process, and a storage medium in which a program of file playback process is stored, which allow it to provide to a user the result of an effect process for an edited file in the QT format or the like regardless of a difference in processing capability among apparatus.

To achieve the above object, the present invention provides a file recording apparatus for editing video data in accordance with a command input by a user and recording the resultant edited video data in the form of a file, the file including a block of real data management information which is organized in a hierarchical structure and which includes at least a source track in which management information associated with the video data is described and an effect track in which management information associated with an effect to be applied to the video data is described, and a block of real data including at least real data associated with the effect track, the file recording apparatus forming, in the block of management information, at least an alternate track including video data equivalent to video data obtained by performing a process according to the effect track, and information indicating the processing priority level assigned to the alternate track of the video data with respect to the processing priority level assigned to another track.

In this file recording apparatus according to the invention, the alternate track including video data equivalent to video data obtained by performing the process according to the effect track, and the information indicating the processing priority level assigned to the alternate track of the video data with respect to the processing priority level assigned to another track are formed in the block of management information, thereby making it possible to play back the file using a processable alternate track detected by sequentially checking alternate tracks in the order of priority levels based on the information indicating the priority levels thus making it possible even for an apparatus or a system which does not have the capability of processing the effect to provide the result of the effect process to a user. This makes it possible to provide the result of an effect process for an edited file in the QT format or the like to a user by using various apparatus or systems which may be different in processing capability.

The present invention also provides a file recording method including editing video data in accordance with a command input by a user and recording the resultant edited video data in the form of a file, the file including a block of real data management information which is organized in a hierarchical structure and which includes at least a source track in which management information associated with the video data is described and an effect track in which management information associated with an effect to be applied to the video data is described, and a block of real data including at least real data associated with the effect track, the file recording method including the step of forming, in the block of management information, at least forming at least an alternate track including video data equivalent to video data obtained by performing a process according to the effect track, and information indicating the processing priority level assigned to the alternate track of the video data with respect to the processing priority level assigned to another track.

The present invention also provides a program for causing a computer to execute a file recording process including editing video data in accordance with a command input by a user and recording the resultant edited video data in the form of a file, the file including a block of real data management information which is organized in a hierarchical structure and which includes at least a source track in which management information associated with the video data is described and an effect track in which management information associated with an effect to be applied to the video data is described, and a block of real data including at least real data associated with the effect track, the program of the file recording process including the step of forming, in the block of management information, at least an alternate track including video data equivalent to video data obtained by performing a process according to the effect track, and information indicating the processing priority level assigned to the alternate track of the video data with respect to the processing priority level assigned to another track.

The present invention also provides a storage medium in which a program for causing a computer to execute a file recording process is stored, the file recording process including editing video data in accordance with a command input by a user and recording the resultant edited video data in the form of a file, the file including a block of real data management information which is organized in a hierarchical structure and which includes at least a source track in which management information associated with the video data is described and an effect track in which management information associated with an effect to be applied to the video data is described, and a block of real data including at least real data associated with the effect track, the program of the file recording process including the step of forming, in the block of management information, at least an alternate track including video data equivalent to video data obtained by performing a process according to the effect track, and information indicating the processing priority level assigned to the alternate track of the video data with respect to the processing priority level assigned to another track.

As described above, the present invention provides the file recording method, the program of file recording process, and the storage medium in which the program of file recording process is stored, which allow it to provide to a user the result of an effect process for an edited file in the QT format or the like regardless of a difference in processing capability among apparatus.

The present invention also provides a file playback apparatus adapted to play back video data recorded in the form of a file on a recording medium and output the resultant video data, the file including a block of real data management information which is organized in a hierarchical structure and which includes at least a source track in which management information associated with the video data is described, an effect track in which management information associated with an effect to be applied to the video data is described, and an alternate track including video data equivalent to video data obtained by performing a process according to the effect track, and information indicating the processing priority level assigned to the alternate track of the video data with respect to the processing priority level assigned to another track, and a block of real data including at least real data associated with the effect track, the file playback apparatus performing a process including the step of detecting a processable alternate track in the order from the highest priority level to lower priority levels based on the information indicating the priority level and playing back the file using the detected alternate track.

The present invention also provides a file playback method of playing back video data recorded in the form of a file on a recording medium and outputting the resultant video data, the file including a block of real data management information which is organized in a hierarchical structure and which includes at least a source track in which management information associated with the video data is described, an effect track in which management information associated with an effect to be applied to the video data is described, and an alternate track including video data equivalent to video data obtained by performing a process according to the effect track, and information indicating the processing priority level assigned to the alternate track of the video data with respect to the processing priority level assigned to another track, and a block of real data including at least real data associated with the effect track, the file playback method including the step of detecting a processable alternate track in the order from the highest priority level to lower priority levels based on the information indicating the priority level and playing back the file using the detected alternate track.

The present invention also provides a program for causing a computer to execute a file playback process including playing back video data recorded in the form of a file on a recording medium and outputting the resultant video data, the file including a block of real data management information which is organized in a hierarchical structure and which includes at least a source track in which management information associated with the video data is described, an effect track in which management information associated with an effect to be applied to the video data is described, and an alternate track including video data equivalent to video data obtained by performing a process according to the effect track, and information indicating the processing priority level assigned to the alternate track of the video data with respect to the processing priority level assigned to another track, and a block of real data including at least real data associated with the effect track, the program of the file playback process including the step of detecting a processable alternate track in the order from the highest priority level to lower priority levels based on the information indicating the priority level and playing back the file using the detected alternate track.

The present invention also provides a storage medium in which a program for causing a computer to execute a file playback process is stored, the file playback process including playing back video data recorded in the form of a file on a recording medium and outputting the resultant video data, the file including a block of real data management information which is organized in a hierarchical structure and which includes at least a source track in which management information associated with the video data is described, an effect track in which management information associated with an effect to be applied to the video data is described, and an alternate track including video data equivalent to video data obtained by performing a process according to the effect track, and information indicating the processing priority level assigned to the alternate track of the video data with respect to the processing priority level assigned to another track, and a block of real data including at least real data associated with the effect track, the program of the file playback process including the step of detecting a processable alternate track in the order from the highest priority level to lower priority levels based on the information indicating the priority level and playing back the file using the detected alternate track.

As described above, the present invention provides the file playback method, the program of file playback process, and the storage medium in which the program of file playback process is stored, which allow it to provide to a user the result of an effect process for an edited file in the QT format or the like regardless of a difference in processing capability among apparatus.

Thus, the present invention makes it possible to provide to a user the result of an effect process for an edited file in the QT format or the like regardless of a difference in processing capability among apparatus.

### Brief Description of the Drawings

Fig. 1 is a diagram illustrating handling of a QT file in terms of a one-source effect according to a conventional technique.
Fig. 2 is a diagram illustrating handling of a QT file in terms of a two-source effect according to a conventional technique.
Fig. 3 is a video disk apparatus according to a first embodiment of the present invention.
Fig. 4 is a schematic diagram illustrating a QT file.
Fig. 5 is a schematic diagram showing an atom structure of a QT file.
Fig. 6 is a diagram showing an atom structure of a QT file in terms of a one-source effect.
Fig. 7 is a diagram showing a part continued from Fig. 6.
Fig. 8 is a diagram showing an atom structure of a QT file in terms of a two-source effect.
Fig. 9 is a diagram showing a part continued from Fig. 8.
Fig. 10 is a diagram showing a part continued from Fig. 9.
Fig. 11 is a diagram illustrating a one-source effect process performed in the video disk apparatus shown in Fig. 3.
Fig. 12 is a diagram illustrating a two-source effect process performed in the video disk apparatus shown in Fig. 3.
Fig. 13 is a diagram showing a sample description atom associated with a video track.
Fig. 14 is a diagram showing a sample description atom associated with an effect track.
Fig. 15 is a diagram showing effect types.
Fig. 16 is a diagram showing an extension field of sample description atom associated with an effect track.
Fig. 17 is a diagram showing the details of the effect type field shown in Fig. 16.
Fig. 18 is a table showing contents of the parameter flag shown in Fig. 16.
Fig. 19 is a table showing parameters corresponding to effect types shown in Fig. 15.
Fig. 20 is a diagram showing a part continued from Fig. 19.
Fig. 21 is a diagram illustrating an alternate track.
Fig. 22 is a diagram illustrating a track header atom.
Fig. 23 is a diagram illustrating a user data atom;
Fig. 24 is a diagram illustrating a user data list in the user data atom shown in Fig. 23.
Fig. 25 is a diagram illustrating a track property atom in the user data list shown in Fig. 24.
Fig. 26 is a diagram illustrating a presentation type in the track property atom shown in Fig. 25.
Fig. 27 is a diagram illustrating a QT file in terms of a one-source effect.
Fig. 28 is a diagram illustrating a QT file in terms of a two-source effect.
Fig. 29 is a diagram illustrating an effect process performed in the video disk apparatus shown in Fig. 3.
Fig. 30 is a flow chart showing a process performed by a system control microcomputer of the video disk apparatus shown in Fig. 3.
Fig. 31 is a diagram showing an effect process performed by a video disk apparatus according to an second embodiment of the present invention.
Fig. 32 is a diagram showing an effect process performed by a video disk apparatus according to an third embodiment of the present invention.

### Best Mode for Carrying Out the Invention

Embodiments of the present invention are described in detail below with reference to drawings.

### (1) Construction of Embodiments

### (1-1) General Constrution of Video Disk Apparatus

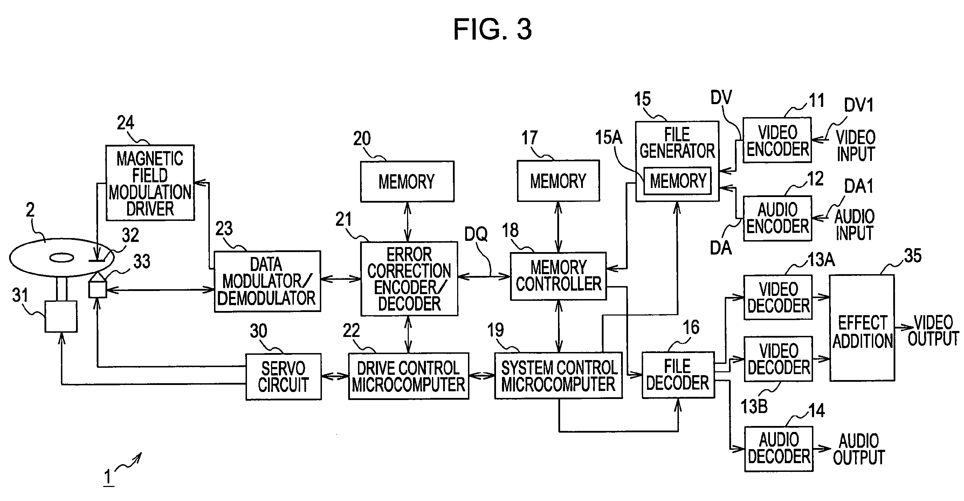

Fig. 3 is a block diagram showing a video disk apparatus according to an embodiment of the present invention. In this video disk apparatus 1, a video signal and an audio signal of a subject are respectively acquired by imaging means and sound acquisition means (not shown), and the video signal and the audio signal obtained as a result of taking an image of the subject are recorded on an optical disk 2. In a playback operation, the video signal and the audio signal are read from the optical disk 2 and output on a liquid crystal display panel serving as display means or from a speaker serving as sound output means. The video signal and the audio signal read from the optical disk 2 may be output to an external device as required. A user is allowed to specify a particular part of the video signal or the audio signal and edit it.

In the video disk apparatus 1, the video signal and the audio signal obtained as a result of the image capturing process are compressed into the MPEG format and are recorded in a predetermined file format on the optical disk 2. In this specific embodiment, the QT format is used as the file format. Hereinafter, a file in the QT format will be referred to simply as a QT file.

In the video disk apparatus 1, a video encoder 11 generates video data by converting a video signal DV1 from analog form into digital form, encodes the video data into the MPEG format, and outputs the resultant video data in the form of an elementary stream DV.

An audio encoder 12 generates audio data by converting an audio signal DA1 of the taken movie from analog form into digital form, encodes the audio data into the MPEG format, and outputs the resultant audio data in the form of an elementary stream DA.

When video disk apparatus 1 operates in a recording mode, a file generator 15 generates a QT file under the control of a system control microcomputer 19 by multiplexing, in a synchronized form, the elementary streams DV and DA output respectively from the video encoder 11 and the audio encoder 12. More specifically, the file generator 15 multiplexes the input elementary streams DA and DV and outputs a sequence of resultant data in the form of a movie data atom. While outputting the sequence of data of the movie data atom, data necessary to generate a movie atom corresponding to the movie data atom is stored in an appending manner in a memory 15A of the file generator 15. When the recording of the movie data atom is completed, a sequence of data of the movie atom is generated from the data stored in the memory 15A, and the result is output.

A memory controller 18 switches its operation mode under the control of the system control microcomputer 19. In the recording mode, the memory controller 18 temporarily stores, in a memory 17, the sequence of data of a QT file output from the file generator 15 and outputs the data stored in the memory 17 with proper timing so that the data can be properly processed by the error correction encoder/decoder 21. Conversely, in the playback mode, conversely, data output from the error correction encoder/decoder 21 is temporarily stored, and the stored data is supplied as required to a file decoder 16 and the system control microcomputer 19.

The error correction encoder/decoder 21 switches its operation mode under the control of the system control microcomputer 19. In the recording mode, the error correction encoder/decoder 21 temporarily stores data output from the memory controller 18 into a memory 20 and adds correction code to the data. The error correction encoder/decoder 21 reads the data stored in the memory 20 in a particular order so as to obtain interleaved data, and supplies the resultant data to a data modulator/demodulator 23. Conversely, in the playback mode, the error correction encoder/decoder 21 temporarily stores, in a particular order, data output from the data modulator/demodulator 23 in the memory 20 so as to obtain deinterleaved data and supplies the resultant deinterleaved data to the memory controller 18. In this process, the error correction encoder/decoder 21 performs an error correction using the error correction code added to the data in the recording process.

The data modulator/demodulator 23 switches its operation mode under the control of the system control microcomputer 19. In the recording mode, the data modulator/demodulator 23 converts the data output from the error correction encoder/decoder 21 into serial form and modulates it. The data modulator/demodulator 23 supplies the resultant modulated data to a magnetic field modulation driver 24 or an optical pickup 33. In the playback mode, the data modulator/demodulator 23 reproduces a clock signal from a playback signal output from the optical pickup 33, thresholds the playback signal into a binary signal, and decodes it so as to obtain playback data corresponding to the serial data generated in the recording process. The resultant playback data is supplied to the error correction encoder/decoder 21.

In a case in which a magnetooptical disk is used as the optical disk 2, in the recording operation, the magnetic field modulation driver 24 drives a magnetic head 32 in accordance with the signal output from the data modulator/demodulator 23 under the control of the system control microcomputer 19. The magnetic head 32 is disposed such that the magnetic head 32 faces toward the optical pickup 33 via the optical disk 2 so that the magnetic head 32 applies a magnetic field, modulated according to the data output from the data modulator/demodulator 23, to a spot illuminated with a laser beam emitted from the optical pickup 33. Thus, in the video disk apparatus 1 of the type in which a magnetooptical disk is used as the optical disk 2, data obtained as a result of taking a movie is recorded as a file in the QT format on the optical disk 2 using the thermomagnetic effect.

The optical disk 2 is a disk-shaped recording medium. In the present embodiment, a rewritable optical disk such as a magneto-optical (MO) disk or a phase change optical disk is used. Under the control of a servo circuit 30, a spindle motor 31 rotates the optical disk 2 at a constant linear velocity (CLV), a constant angular velocity (CAV), or a zone constant linear velocity (ZCLV) depending on the type of the optical disk 2.

The servo circuit 30 controls the spindle by controlling the operation of the spindle motor 31 in accordance with signals output from the optical pickup 33. The servo circuit 30 also controls the optical pickup 33 in terms of tracking and focusing. The servo circuit 30 also controls the seeking operation of the optical pickup 33 and the magnetic head 32 and the focus search operation.

Under the control of the system control microcomputer 19, a drive control microcomputer 22 controls the seek operation performed by the servo circuit 30.

The optical pickup 33 projects a laser beam onto the optical disk 2 detects light reflected from the optical disk 2 by using a photosensor disposed in the optical pickup 33. The optical pickup 33 generates various kinds of control signals based on the light detected via the photosensor and outputs the detected control signals. The optical pickup 33 generates the playback signal whose signal level changes in accordance with a sequence of pits or marks formed on the optical disk 2 and outputs the generated playback signal. The optical pickup 33 operates differently depending on its operation mode controlled by the system control microcomputer 19. In the case in which a magnetooptical disk is used as the optical disk 2, the operation in the recording mode is performed such that the optical pickup 33 intermittently raises the intensity of the laser beam striking the optical disk 2. Thus, in this video disk apparatus 1, data obtained as a result of taking a movie is recorded in the form of a pulse train on the optical disk 2. In the case in which a phase change optical disk is used as the optical disk 2, the optical pickup 33 raises the intensity of the laser beam striking the optical disk 2 from a low level, which is the same as the intensity level used in the playback operation, to a high writing level in accordance with the data output from the data modulator/demodulator 23 thereby thermally recording the data obtained as a result of taking a movie on the optical disk 2.

In this video disk apparatus 1, as described above, the video signal and the audio signal obtained as a result of taking a movie are respectively compressed by the video encoder 11 and the audio encoder 12 and output in the form of elementary streams. The file generator 15 generates a file in the QT format from the elementary streams output from the video encoder 11 and the audio encoder 12. The resultant file in the QT format is transferred to the optical pickup 33 or to the optical pickup 33 and the magnetic head 32 via the memory controller 18, the error correction encoder/decoder 21, and the data modulator/demodulator 23 and recorded on the optical disk 2.

In the video disk apparatus 1, in the playback operation, the playback signal output from the optical pickup 33 is processed by the data modulator/demodulator 23, and the result thereof is output as playback data. The playback data is processed by the error correction encoder/decoder 21, and thus the file in the QT format recorded on the optical disk 2 is reproduced. The reproduced data of the QT file is output via the memory controller 18.

If the file decoder 16 receives the QT file data output from the memory controller 18, the file decoder 16 separates the received data into video data and audio data and outputs elementary streams of video data and audio data. In this process, the file decoder 16 acquires movie atom data via the seeking process performed under the control of the system control microcomputer 19, and the file decoder 16 outputs the elementary streams of video data and audio data in accordance with management information described in the movie atom.

Video decoders 13A and 13B decompress the elementary streams of the video data and output the resultant video data to the display means or an external device (not shown). In this video disk apparatus 1, because the video decoders 13A and 13B are each capable of processing elementary streams of the video data, it is possible to output simultaneously and in parallel two different video data for use in the two-source effect. An effect addition circuit 35 operates under the control of the system control microcomputer 19 as follows. In a normal playback operation, the effect addition circuit 35 directly outputs the video data received from the video decoder 13A or 13B without performing any process on the video data. However, when the video data is edited, the effect addition circuit 35 adds or does not add an effect, in accordance with a command issued by the system control microcomputer 19, to the video data output from the video decoder 13A or 13B and outputs the resultant video data. In the two-source effect processing, two video data output respectively from the video decoders 13A and 13B are converted into a single video data via the effect processing performed by the effect addition circuit 35.

An audio decoder 14 decompresses the elementary stream of the audio data output from the file decoder 16 and outputs the resultant data to audio output means or the external device (not shown). Thus, the video disk apparatus 1 has the capability of monitoring the video data played back from the optical disk 2.

The system control microcomputer 19 is a computer responsible for general control of the operation of the video disk apparatus 1. In response to an operation performed by a user, the system control microcomputer 19 executes a processing program stored in a memory (not shown) to control the operation of various parts of the video disk apparatus 1. More specifically, the system control microcomputer 19 controls various operations including recording of video data on the optical disk 2, playing back the video data from the optical disk 2 and presenting the played-back video data to a user, editing the video data, etc.

Note that, in this video disk apparatus 1, the processing program executed by the system control microcomputer 19 is preinstalled in the video disk apparatus 1. Instead of preinstalling the processing program, the processing program may be installed from a storage medium as required. As for the storage medium for this purpose, various kinds of storage media such as an optical disk, magnetic disk, a memory card, or a magnetic tape may be used. (1-2) QT File

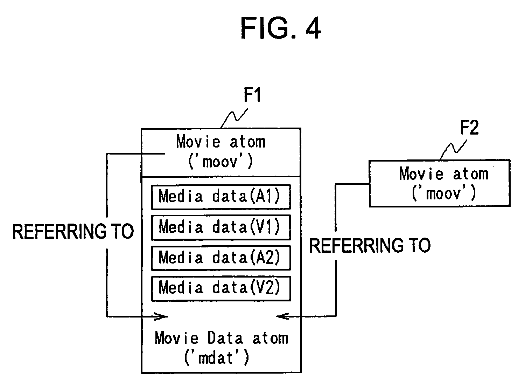

Fig. 4 is a conceptual diagram showing the basic structure of a QT file. The QT format is a file format established as an extended function of an operating system (OS) to make it possible to play back a moving picture or the like without using special hardware. The QT format is a time-base multimedia file format that allows real data in various forms such as moving picture data, audio data, still image data, text data, MIDI data etc. to be played back such that the data in various forms are synchronized on a single time base.

In the QT file, real data in various formats are separately stored as media data in different tracks. Tracks in which real data of video, sound, and text are respectively referred to as a video track, a sound track (audio track), and a text track. The QT file further includes a track such as an MPEG2-PS (Program Stream) track for managing multiplexed data of video data and audio data such as MPEG2-PS data.

In the QT file F1 or F2, a set of such tracks forms a movie data atom, and management information associated with each track of the movie data atom is organized as a movie atom. Note that atoms are also called boxes. The movie data atom has an atom type name "mdat" and is also called a media data. The movie atom has an atom type name "moov" and is also called a movie resource.

The QT file may be in either an all-included form F1 in which the movie data atom and the movie atom are all formed in the same file or in an external-reference form F2 in which the file includes only the movie atom. The external-reference file F2 includes data that points to a movie data atom existing in another file F1. This allows the file F2 to be used in non-linear editing or the like. When a movie data atom existing in an external file (such as the QT file F1) is managed by a movie atom, management information such as a relative path or an absolute path indicating the location thereof on a recording medium is also described in the movie atom.

In the example of the all-included type file F1 shown in Fig. 4, audio data (A1 and A2) and video data (V1 and V2) are stored as media data in a movie data atom, and these media data can be played back in accordance with management information described in a movie atom stored in this file F1 or in accordance with management information described in a movie atom stored in an external reference type file F2.

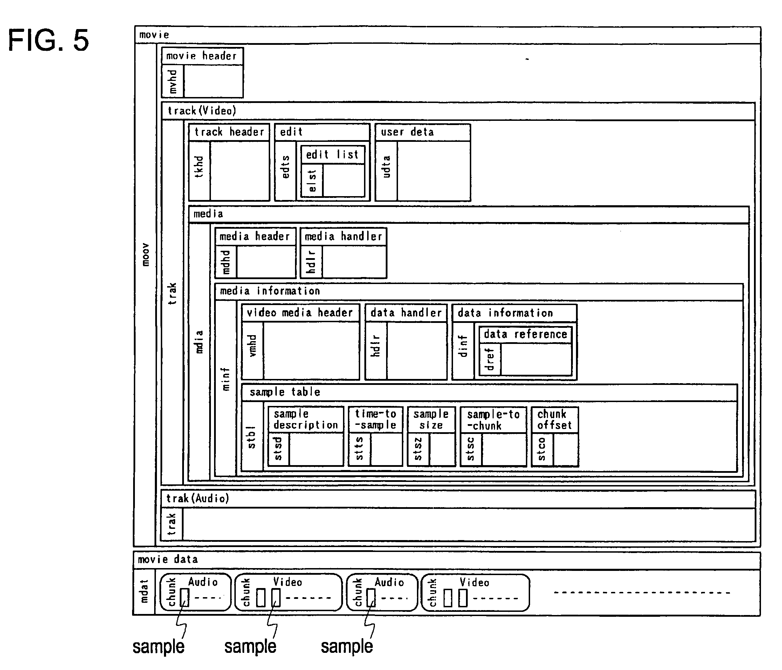

Fig. 5 shows a general structure of a movie data atom including video tracks and audio tracks and that of a movie atom in a all-included type file, such as the file F1. In this figure, type names of respective atoms are also shown. In the movie atom, track atoms (having a type name of "trak") are substantially the same in terms of structure of lower-layer atoms for video tracks and audio tracks, and thus lower-layer audio track atoms are not shown in Fig. 5 for simplicity.

The movie atom includes atoms in which management information, such as time information necessary in playback of the file and position information identifying real data, is described, wherein the atoms are organized hierarchically according to properties. More specifically, the movie atom includes a movie header atom, a track atom, and other atoms. The movie header atom has type name "mvhd" and header information is described therein. One track atom is formed for each track in the movie data atom. In this specific example, a video track atom and an audio track atom are formed. Each track atom includes a track header atom, an edit atom, a user data atom, and a media atom. In these atoms of the track atom, information about corresponding real data in the movie data atom is described.

In the track header atom, header information is described. In the edit atom, information indicating the temporal relationship with corresponding media data (real data) is described. An edit list atom is formed as required, and the time-base relationship between the track of the present track atom and the media is described. In the user data atom, additional user-defined data associated with the track is written as required. In the user data atom, as described in detail later, a plurality of additional data can be described by using extension fields.

The media atom has a type name "mdia", and information for managing the compression method, the storage location, and the display time is described therein. The media atom includes a media header atom, a media handler reference atom, and a media information atom. In the media header atom, header information is described. In the media handler reference atom (denoted as "media handler" in Fig. 5), the type of the corresponding real data is described whereby making it possible to detect the data type such as video data or audio data.

The media information atom is assigned "minf" as its type name, and various kinds of information associated with a sample, which is a minimum management unit, are described in the media information atom. The media information atom includes a media information header atom (such as a video media information header or a sound media information header (in the example shown in Fig. 5, a video media header)) corresponding to the real data, a data handler reference atom (denoted as "data handler" in Fig. 5), a data information atom, and a sample table atom.

The media information header atom is assigned "vmhd" or "smhd" as its type name depending on whether its higher-level media handler reference atom indicates that the corresponding track is a video track or an audio track, and header information is described therein. In the case of a track that manages data in which video data and audio data are multiplexed, such as an MPEG2-PS (Program Stream) track that manages MPEG2-PS data, a media information header atom (base (general) media information header) is assigned "gmhd" as its type name. In the data handler reference atom, information associated with handling of the corresponding real data is described. In the data information atom, information indicating the storage location and storage method of data to be referred to by the lower-level data reference atom.

The sample table atom is assigned "stble" as its type name, and information associated with each sample is described therein. The sample table atom includes a sample description atom, a time-to-sample atom, a sample size atom, a sample-to-chunk atom, and a chunk offset atom.

In the sample description atom, information about decoding, such as information indicating the data compression method and associated information, is described. In the time-to-sample atom, the time-base relationship between each sample and decoding is described using a frame rate. In the sample size atom, the data size of each sample is described. In the sample-to-chunk atom, the relationship between a chunk and samples included in that chunk is described. Note that a chunk is a block including a set of a plurality of samples, and each track data in the movie data atom is formed in units of chunks. In the chunk offset atom, information indicating the start position of each chunk with respect to the start of the file is described using an entry. In the QT format, in accordance with the management information described in the sample table atom, it is possible to sequentially play back respective samples which are management units of the real data.

On the other hand, in the movie data atom, elementary streams of video data and audio data, which are real data of the QT file, are stored in the form of chunks, that is, sets of samples, such that chunks of video data elementary streams and chunks of audio data elementary streams are alternately located.

In the present embodiment, the elementary stream of audio data is encoded into a compressed form by the audio encoder 12 in accordance with the standard of the MPEG1 Audio Layer 2, and the elementary stream of video data is encoded into a compressed form by the video encoder 11 in accordance with the standard of the MPEG2 Video. In the QT file, various types of video data such as Motion JPEG video data, Motion JPEG2000 video data, MPEG4 video data, or AVC (Advanced Video Coding: MPEG4-part10) video data and various types of audio data such as Dolby AC3 audio data or ATRAC (Adaptive Transform Acoustic Coding) audio data can be employed. Video data and the audio data are not necessarily needed to be in a compressed form, but uncompressed video data or audio data such as linear data may also be employed. In the QT file, it is also allowed to store data in which video data and audio data are multiplexed, such as MPEG2-PS (Program Stream) data.

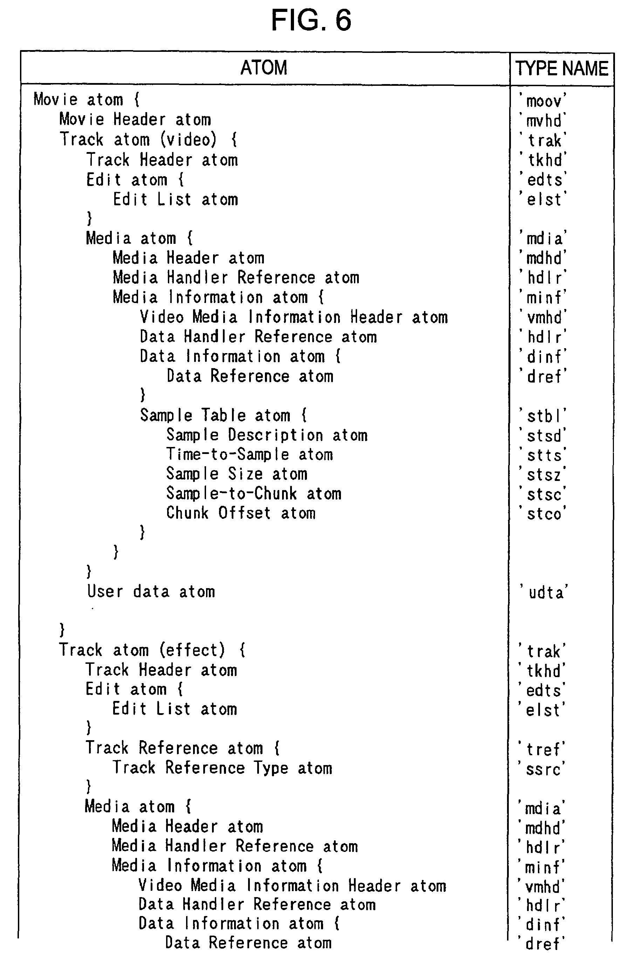

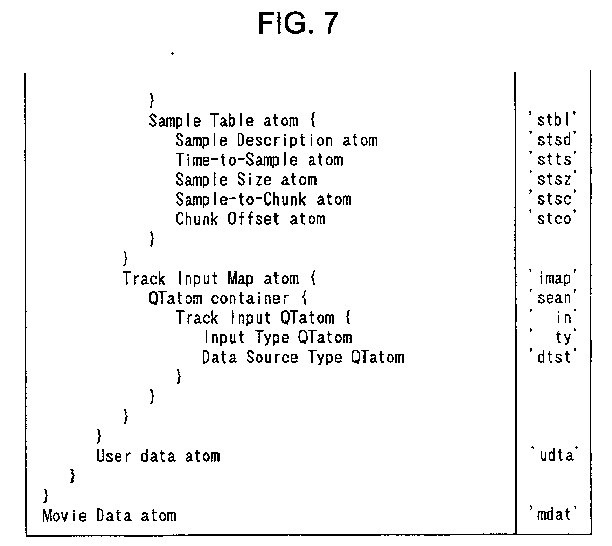

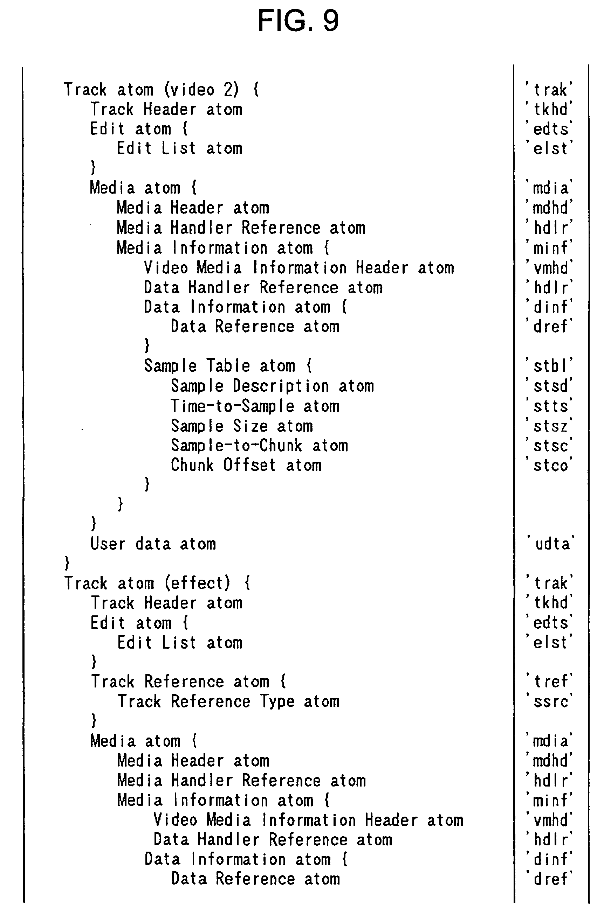

In the QT format having a video track and an audio track, an effect to be applied to video data may be described in a track called an effect tract, as shown in Figs. 6 to 10. Figs. 6 to 10 are diagrams showing file structures in the QT format described using the C language, for respective type names defined in the type field. Figs. 6 and 7 shows an example of a filtering process specified as an effect process via an editing process. In this example, only one video track is subjected to the effect process. Such an effect process is called a one-source effect process. Specific examples of filtering processes on one video source are monochrome conversion, sepia conversion, blurring, and mosaicing.

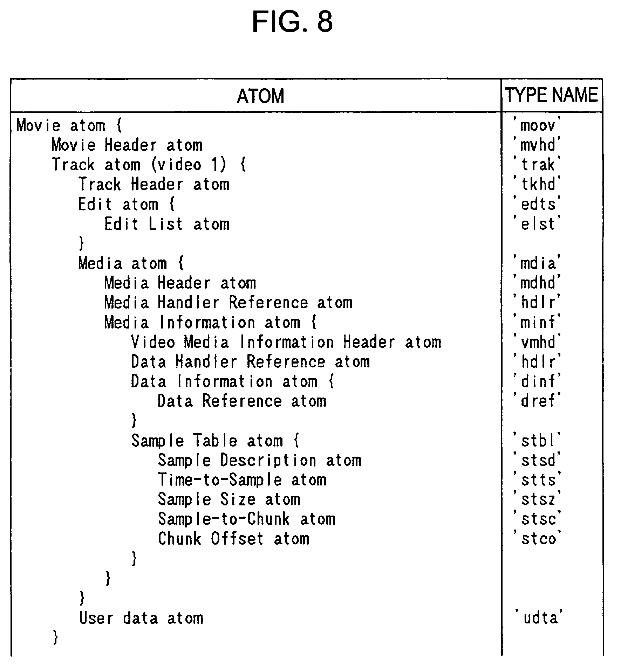

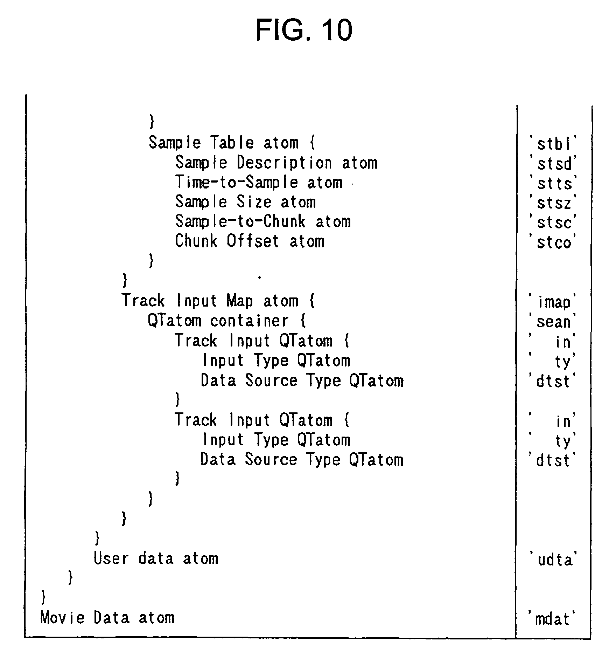

Figs. 8 and 10 shows an example of a two-source effect applied to two video tracks. Specific examples of two-source effects are cross fading and wiping. Note that in Figs. 6 to 10, only effect tracks and tracks (source tracks) in which management information is described as to video data to which effects specified in the effect tracks are to be applied are shown, but a description associated with audio tracks is not shown.

In the QT format, the effect track has the same media type as the video track, and thus the effect track has the same field structure as that of the video media. The source track is a track for fetching video data to which the effect is to be applied, and thus the source track can be of various types depending on the video data. For example, the source track can be of the video media type or of a media type that allows it to handle, for example, MPEG2-PS (Program Stream) data in which video data and audio data are multiplexed. In the embodiment, it is assumed that the source track is a track of the video media type.

That is, in the QT file, as shown in Fig. 6, following a movie header atom of a movie atom, a track atom of a video track is formed in the manner described above with reference to Fig. 5. In the QT file, this video track is specified as the source track. Following this, a track atom used as an effect track (Track atom (effect)) is formed. As with the video track, a track header atom, an edit atom, and a media atom are formed in this effect track. In this effect track, in addition to the track header atom, the edit atom, and the media atom described above, a track reference atom (having a type name of "tref") is also form.

In the track reference atom, information is described to indicate the source track to which the effect is to be applied. More specifically, in the track reference atom, a track ID described in the track header atom (having a type name of "tkhd") of the corresponding source track is described in a track reference type atom (having a type name of "ssrc) in this track reference atom. A track ID is an identification code uniquely assigned to each track. Based on this track ID, the effect track identifies the video track to be processed.

In the case of a one-source effect as with the example shown in Figs. 6 and 7, one of video tracks in a movie atom is specified by a track ID described in a track reference type atom. On the other hand, in the case of a two-source effect as in the example shown in Figs. 8 to 10, two of video tracks of a movie atom including two or more video tracks are specified by two track IDs described in a track reference type atom.

The effect track includes, as component elements of the media atom of the video media type, a media header atom, a media handler reference atom, a media information atom, and a track input map atom (having a type name of "imap"). In the track input map atom, information associated with the source track to be input to the effect track and to be subjected to the effect process is described in a QT atom structure.

In the QT atom structure, as many track input QT atoms (having a type name of "in" (first two characters of the type name are expressed as 0x0000 in hexadecimal)) as required are packed in a QT atom container (having a type name of "sean") which is the highest-level atom in the QT atom structure. Each track input QT atom includes an input type QT atom (having a type name of "ty" (first two characters of the type name are expressed as 0x0000 in hexadecimal)) indicating that the input source is video media, and a data source type QT atom (having a type name of "dtst") indicating a name uniquely assigned to the source track.

Note that in contrast to the one-source effect shown in Figs. 6 and 7 in which there is only one track input QT atom, there are two track input QT atoms in the case of the two-source effects shown in Figs. 8 to 10.

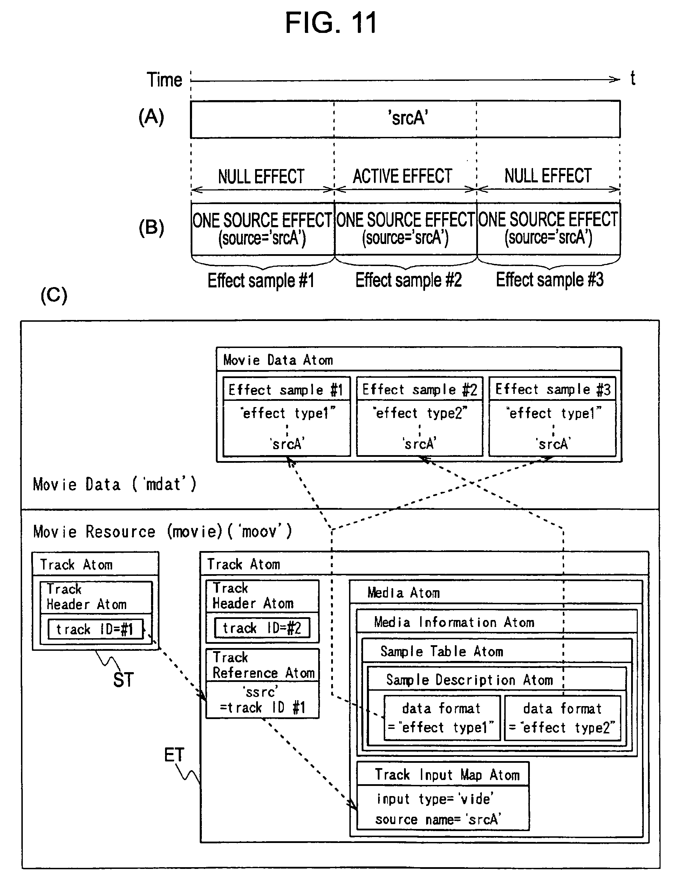

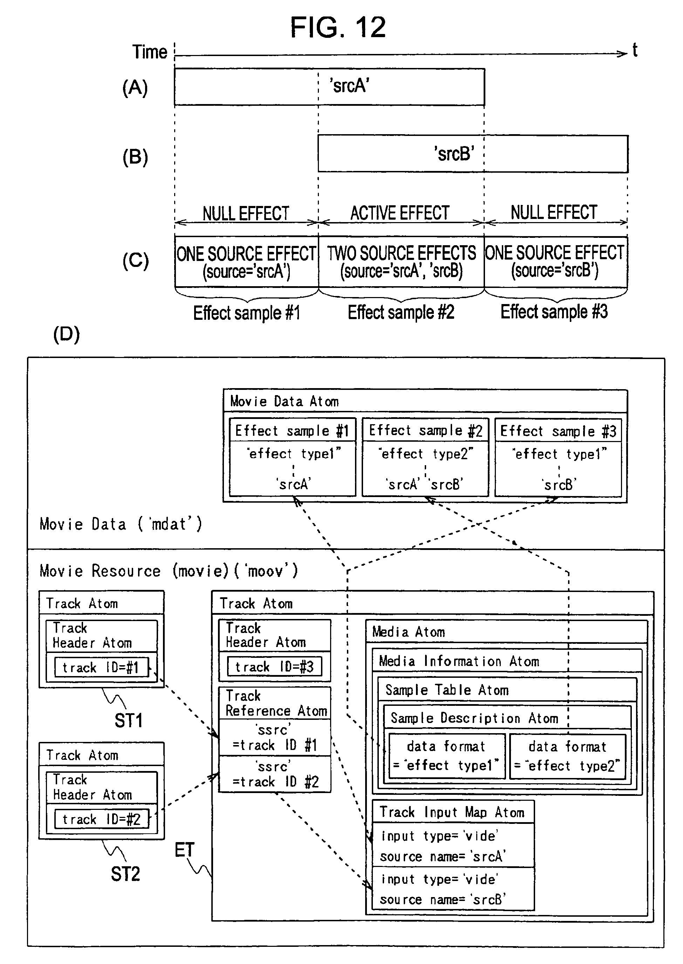

Thus, in the QT file, source tracks ST, ST1, and ST2 are identified by the track reference atom (having a type name of "tref") of the effect track ET and the track input map atom (having a type name of "imap") as shown in Fig. 11(C) or Fig. 12(D). Fig. 11(C) shows an example of a description for a one-source effect and Fig. 12(D) shows an example of a description for a two-source effect. In Figs. 11(A) and (B) and Figs. 12(A) to (C), shown are active data of video data and effect tracks in which effects to be applied to the video data are described.

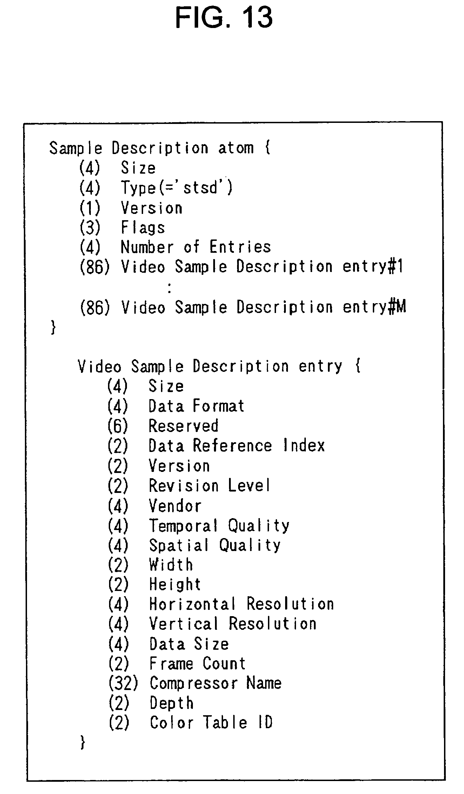

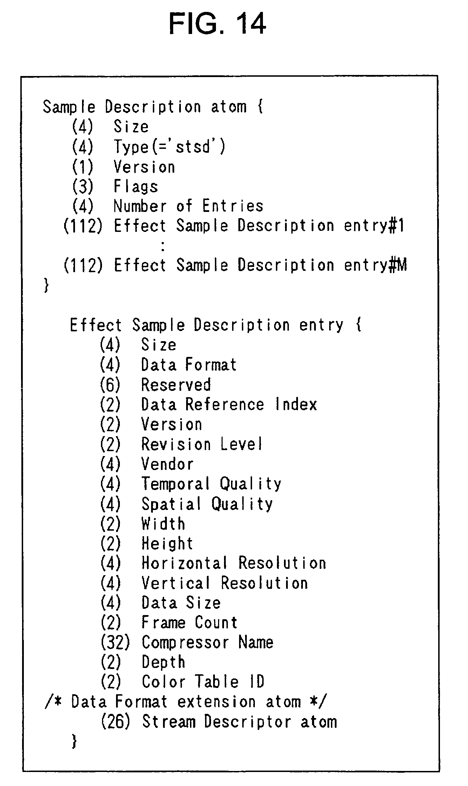

In the effect track, information associated with the effect is described in a sample description atom in a sample table atom. Fig. 13 shows a sample description atom of a video track. In Fig. 13 and following Fig. 14, the data size of each field is described by a numeral enclosed between parentheses.

In the sample description atom of the video track, the size, the type name (stsd), and the version of the sample description atom are described. The sample description atom also includes flags. Furthermore, the number of entries included in the sample description atom is described, and there are as many video sample description entries, in which relating information such as information indicating the data compression method is described, as the number of entries.

In each entry (video sample description entry), the size of the entry is described, and subsequently the data compression method (data format) is described. Furthermore, each entry (video sample description entry) has a field (frame count) in which the number of frames assigned to one sample is described as information associated with the data format.

On the other hand, in the case of a sample description atom of an effect track, as shown in Fig. 14 for comparison with Fig. 13, the sample description atom includes fields for describing the size, the type name (stsd), the version, flags, and the number of entries as with the sample description atom of the video track, and, subsequently, include as many entries (effect sample description entries) associated with the effect as required.

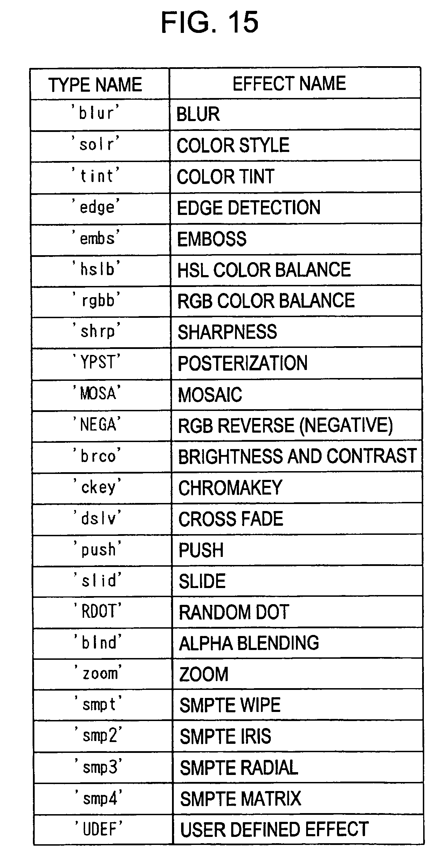

Each entry (effect sample description entry) associated with the effect has a field (Size) for describing the size of the entry and a field (Data Format) for describing the type of the effect. As shown in Fig. 15, the effect type is described in four alphabetical characters, and effect types for a one-source effect include blurring (blur), color style (solr), color tint (tint), edge detection (edge), emboss (embs), HSL color balance (hslb), RGB color balance (rgbb), sharpness (shrp), brightness and contrast (brco), etc. Effect types for a two-source effect include chromakey, cross fade, push, slide, alpha blending, zoom, SMPTE (Society of Motion Picture and Television Engineers) wipe, SMPTE iris, SMPTE radial, SMPTE matrix, etc., although a further detailed description is not given herein. In the present embodiment, the effect types further include posterization (YPST), mosaic (MOSA), reverse (RGB Reverse (Negative) (NEGA)), random dot (RDOT), and user defined effect (UDEF).

The posterization (YPST) is a process of reducing the number of brightness levels. The mosaic (MOSA) is a process of conversion into mosaic. The reverse (RGB Reverse (Negative) (NEGA)) is a process of positive-to-negative conversion. The random dot (RDOT) is a two-source effect process in which the screen is switched while randomly placing dots. Provision of this effect in the present embodiment allows an improvement in usability.

The user defined effect (UDEF) is a generic effect type given to effects defined by manufacturers or the like that provide devices or the like. The detailed type of the user defined effect (having a type name of "UDEF") is defined using an extension atom provided for use to describe extension information of the data format. Only when the detailed type is defined in this extension atom, the user defined effect is actually effective.

The entry (effect sample description entry) of each effect includes the same fields as those in an entry of a video track, such as a reserved field, a data reference index field, etc., and finally includes an extension atom for use to describe extension information associated with the data format.

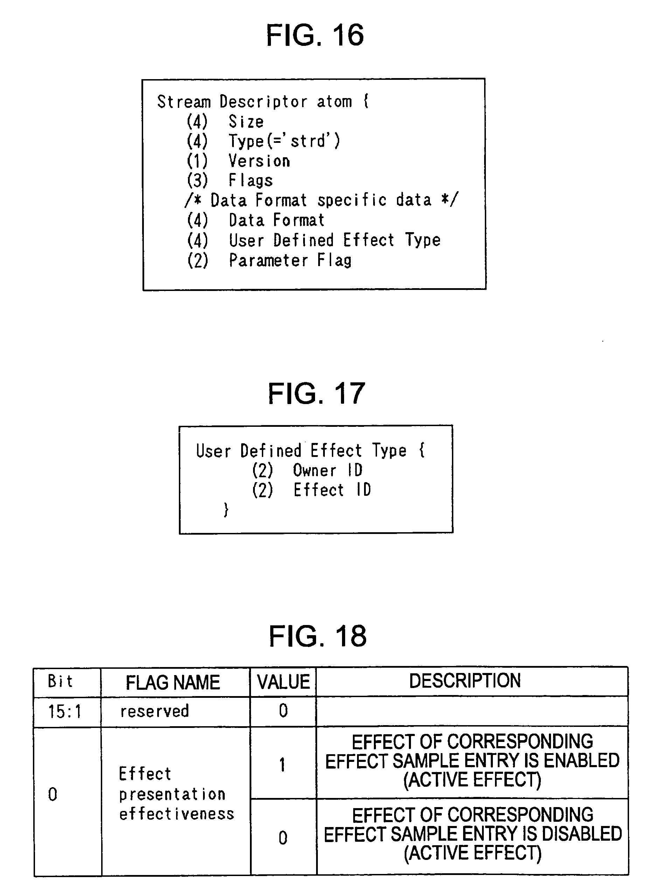

The extension atom for use to describe the extension information associated with the data format includes a stream descriptor atom which is described as shown in Fig. 16. More specifically, the stream descriptor atom includes a field for describing the size of the stream descriptor atom, a field (strd) for describing the type of the stream descriptor atom, a field for describing the version of the stream descriptor atom, and a field for describing flags. Following the flag field, there are fields for describing specific extension information associated with the data format. They are a data format field, a user defined effect type field, and a parameter flag field. Note that the version field and the flag field are reserved for future extension, and 0x0 is assigned to both of these fields in the present embodiment.

In the data format field, which is an extension field, the same effect type (type name) as that described in the data format field of the entry (effect sample description entry) of the effect, which is one of effects described above with reference to Figs. 14 and 15, is described.

In the user defined effect type field, a specific effect type defined by a user is described. The user defined effect type field has a length of 4 bytes, which is divided into two parts each having a length or 2 bytes for use to describe an owner ID and an effect ID, respectively, as shown in Fig. 17.

The owner ID is a preassigned ID uniquely identifying a manufacturer, and the effect ID is an ID identifying a detailed effect name defined by the manufacturer. Thus, in the present embodiment, a manufacturer is allowed to implement various kinds of effects developed by the manufacturer by using the QT format. That is, in the data format field of the entry (effect sample description entry) associated with the effect, user defined effect (UDEF) is described as a general classification identifier to identify that the present effect is a special effect defined by the manufacturer. In the extension atom, the effect name field is divided into two parts each having a length of two bytes such that the owner ID and the effect ID are described therein to identify the detailed effect type defined by the manufacturer. This makes it possible to use the special effect type defined by the manufacturer in a closed environment dedicated to the manufacturer, and thus it is possible to prevent conflict from occurring in terms of codes used in this field. In practice, if it is allowed to define an extension effect without using the owner ID and the effect ID, troublesome management is needed to avoid overlapped use of 4 alphabetic characters among manufacturers and troublesome management is also needed in terms of a serial application number. If it is further allowed even to specify an extension effect defined by a manufacturer only by using the data format field of the entry (effect sample description entry) without introducing the extension atom, a further difficulty can occur. When the owner ID and the effect ID in this data field are reserved, a value of 0x0 is written in each of them. In this case, when user defined effect (UDEF) is set in the effect type field of the data format shown in Fig. 14, use of this effect type is disabled. If an existing effect type other than the user defined effect (UDEF) is declared as the effect type, values described in the owner ID and the effect ID are meaningless. Thus, when an existence effect type other the user defined effect (UDEF) is declared as the effect type, 0x0 is usually set as owner ID and the effect ID.

As shown in Fig. 18, the least significant bit of a total of two bytes of the parameter flag is used to specify whether an effect sample entry of an effect parameter set in real data corresponding to this effect track is active or not. In this setting, in the case in which no change in the video data results from the effect process of the effect sample entry of the corresponding parameter, the effect sample entry of this parameter is set as null. That is, in the present embodiment, by setting this flag, it is possible to skip a useless process. High-order 15 bits of the parameter flag are reserved for further extension.

The real data of the effect track assigned to the movie data atom is stored in units of effect samples as with the video data of the source track. In the effect track, the effect type is defined on a type-by-type basis in the data format field of the sample description atom, and parameter data of the effect processing of the type defined in the sample description atom is stored as the real data of the effect track.

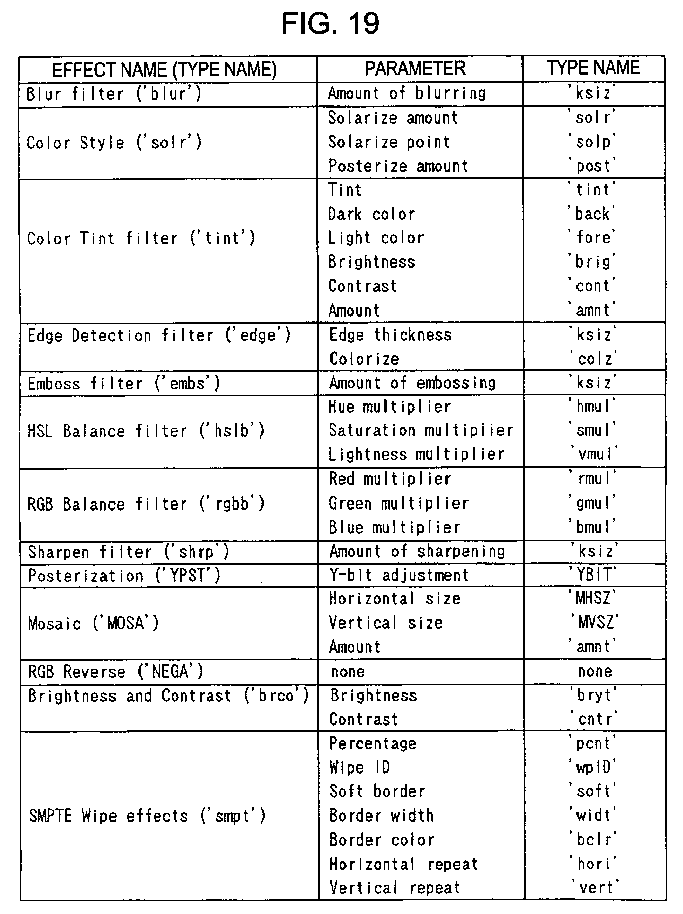

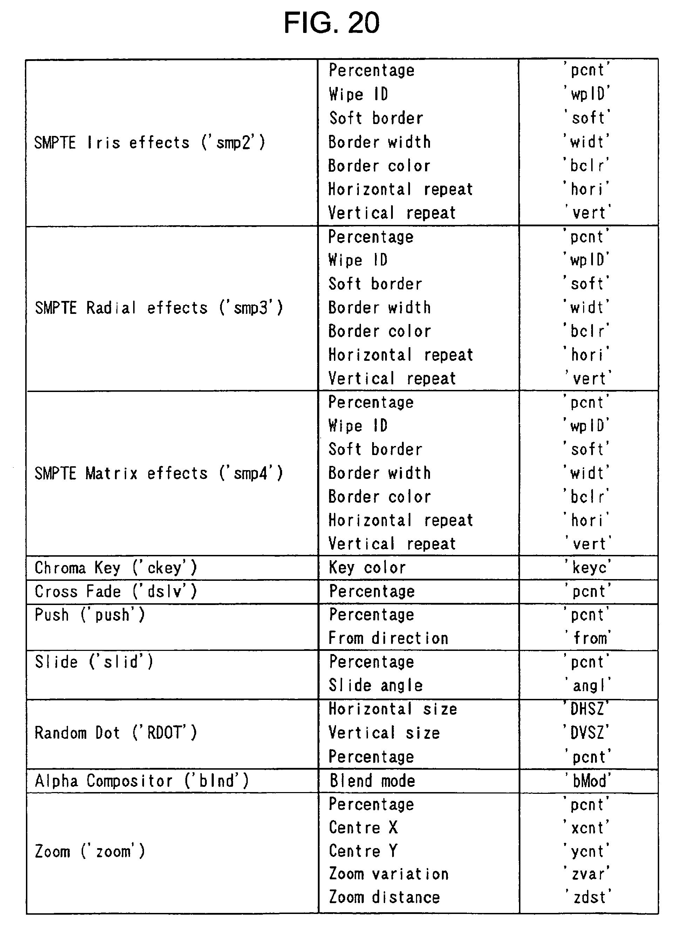

Fig. 19 and Fig. 20 show parameters applicable to the movie data atom, for respective effect types. Each parameter name is represented by four characters extracted from a corresponding parameter type. Each parameter value is stored in the movie data atom such that the type name identifying the parameter type is used as a header identifier.

For example, in the case of the effect type of "brightness and contrast (brco)", brightness and contrast can be set as parameters. The default value of each of these parameters is 0. When the parameter values are set to the default value, the contrast and the brightness are not changed in the effect process. That is, no change occurs in the output. When the effect process provides no effect, the effect is called a null effect. On the other hand, when the effect process provides some effect, the effect is called an active effect. When an effect is set as a null effect, 0 is set as the value of the parameter flag. On the other hand, when an effect is set to be active, 1 is set as the value of the parameter flag.

In the present embodiment, for effects which are set as a null effects by corresponding parameter flags, the movie data atom is not accessed to acquire the parameter thereof. This allows simplification of the process.

In addition to the setting of the parameter flag to define whether the effect is null or active, the track input map atom and the track reference atom of the effect track are set such that the effect track designates, as the source track, the video track to be subjected to the effect process, thereby making it possible to play back the video data with the one-source effect by handling the two tracks, that is, the effect track and the video track designated as the source track, as shown in Fig. 11. This allows a reduction in processing load imposed on the playback system. In the case of video data with a two-source effect, it is possible to playback the video data with the two-source effect by handling three tracks as shown in Fig. 12, and thus a reduction in processing load imposed on the playback system is achieved.

### (1-3) Maintaining Downward Compatibility

When a QT file is used in a consumer device, a problem with compatibility in terms of effects can occur, as described above. Furthermore, an effect defined by an owner identified by an owner ID can be difficult to process depending on a consumer device used. In Fig. 15, effects whose type name is represented by upper case characters are newly added effects, and there is a possibility that a problem can occur in processing these effects.

In the present embodiment, avoid the above problems, downward compatibility is achieved by properly setting an alternate track and a user data atom so that the effect can be correctly performed regardless of a difference in processing capability among devices used.

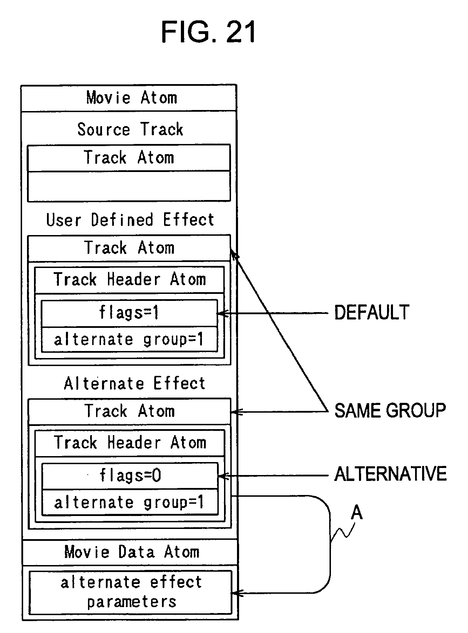

The alternate track is defined in the conventional QT format. When it is difficult for a decoder to decode a track in the QT file in a playback operation, the alternate track is used instead of the difficult track. In the QT file, as shown in Fig. 21, when an effect track includes an effect that can be difficult to process depending on a decoder used, as is the case in which a movie atom is described such that video data designated as a source track is subjected to an effect process defined in a user defined effect track (UDEF shown in Fig. 15), an alternate track is defined for alternative use of the effect track (user defined effect track).

An alternate track for alternative use of an effect track is generally described in a similar manner to the effect track. Furthermore, the effect parameters are described in the movie data atom as represented by an arrow A in Fig. 21. In the example shown in Fig. 21, the alternate track for alternative use of the effect tract is denoted as "alternate Effect".

The relationship between the alternate track and the track to be replaced by the alternate track as required is described in the flag field, the alternate group field, and the layer field in the track header atom of the track atom of the alternate track and also described in similar fields of the track to be replaced by the alternate track as required, thereby making it possible to detect and use the alternate track when a difficulty occurs in playing back of the QT file.

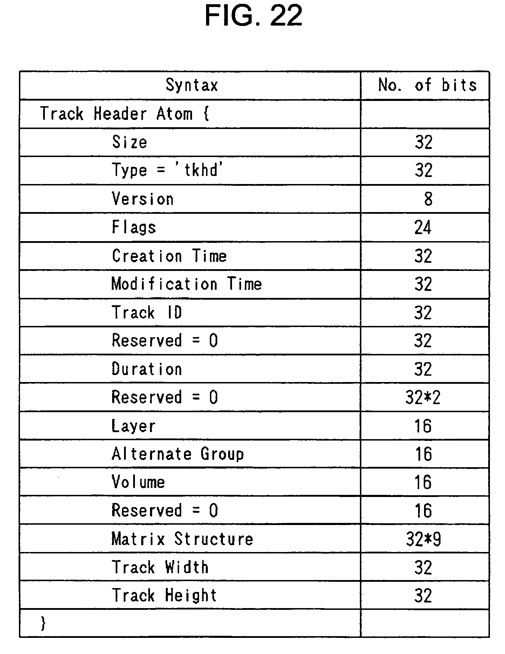

More specifically, as shown in Fig. 22, in the track header atom, the size, the type name (tkhd), and the version of the track header atom are described, and subsequently flags are described. When a predetermined particular bit of the flag has a value of 1, this track is set as an active track that should be displayed. On the other hand, when this particular bit has a value of 0, this track is regarded as an inactive track that is not displayed although it exits. Thus, as shown in Fig. 21, when a user defined effect track and an alternate track for alternative use of this user defined effect track are formed, flags associated with them are respectively set to 1 and 0.

In the track header atom, subsequently described are creation time information, modification time information, a track ID of corresponding real data, a reserved field, a duration, a reserved field, and a layer that specifies the positional layer in which the track should be displayed.

In the layer field, it is allowed to write a positive or negative value or zero. When a plurality of tracks are displayed at the same time, a track with the least layer value is displayed on the top of the screen. For the other tracks, a track with a greater layer value is displayed in a lower layer. Thus, in the QT file, it is possible to specify the displaying priority for the respective tracks by setting the layer value, because tracks under another track are hidden from users.

In the track header atom, an alternate group is described. This alternate group is used to identify the group to which the alternate track belongs. More specifically, to identify that a particular track is an alternate track for a particular original track, the alternate group of the alternate track and the alternate group of the original track are set to the same value. In the example shown in Fig. 21, the alternate group is set to a value of 1 so that the original track and the alternate track for the original track can be detected from the alternate group and the flag. In the track header atom, subsequently other information such as a volume is described.

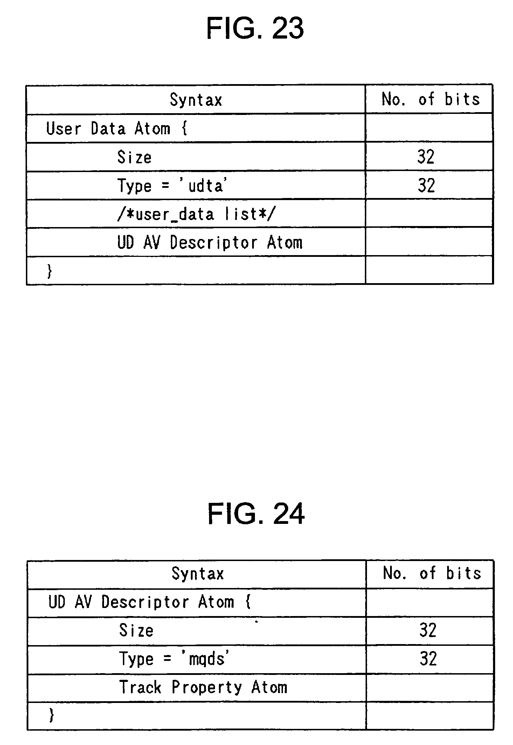

In the present embodiment, it is allowed to give a further detailed definition of the alternate track by using a user data atom. This makes it possible to achieve downward compatibility in a more flexible manner. Fig. 23 shows an example of a user data atom. In the user data atom, first, the size and the type name (udta) of the user data atom are described. Subsequently, user data is defined in a user data list. In this specific example, a UD AV descriptor atom is placed in the user data list.

Fig. 24 shows an example of a UD AV descriptor atom. As shown in Fig. 24, in the UD AV descriptor atom, the size and the type name (mqds) of the UD AV descriptor atom are first described, and then the property of a lower-level track is described in a track property atom.

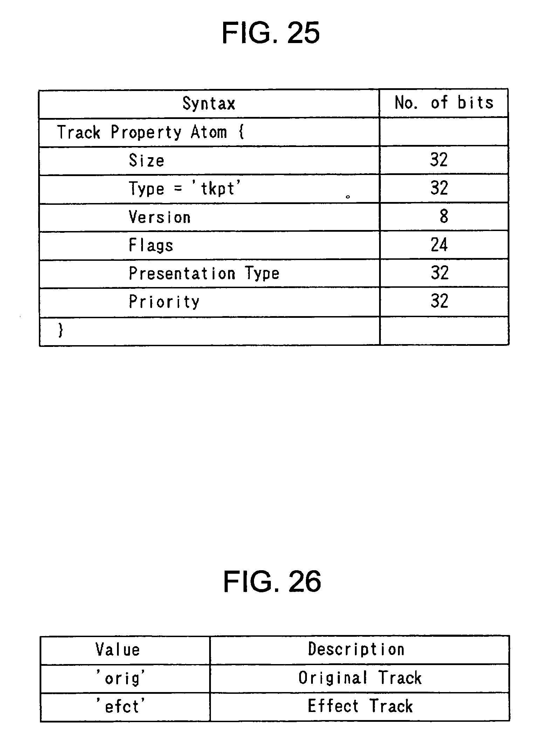

Fig. 25 shows an example of a track property atom. As shown in Fig. 25, in the track property atom, the size, the type name (tkpt), and the version of the track property atom are first described. Subsequently, flags, a presentation type, and priority are described.

In the presentation type field, as shown in Fig. 26, either "orig" or "efct" is written. The character string "orig" is written when the track atom to which the present user data atom belongs is a source track to be subjected to the effect process. On the other hand, the character string "efct" is written when the track atom to which the present user data atom belongs is a displayable track. This character string is set not only to identify that the present track is an alternate track for an effect track but also to identify that the present track is a track of video data obtained as a result of an effect process.

That is, in the present embodiment, when an alternate track including video data representing the result of application of the effect is formed as an alternative for the effect track, in addition to an alternate track in which an effect similar to the effect of the effect track is described, the presentation type is described so as to correctly identity these two types of track atoms.

The priority field is used to define the priority of the process for the track atom to which the present data atom belongs. When 0 is stored in this priority field, no priority is defined. To define the priority, a positive value equal to or greater than 1 is set in the priority field. The smaller value, the higher priority. In the present embodiment, the priority of the process is defined such that, in the same alternate group, alternate tracks that need higher processing power are assigned higher priority.

Thus, in the present embodiment, when a plurality of alternate tracks are formed for an effect track, use of the priority field makes it possible to define the priority among these alternate tracks whereby a selection in terms of alternate tracks in a playback operation is performed in accordance with the priority defined by a file producer. That is, in the playback operation, a determination is made as to whether an alternate track can be processed, sequentially in the order of priority starting with the alternate track that needs highest processing power.

### (1-4) Processing of QT File

In the present video disk apparatus 1, in response to an operation performed by a user, the video data recorded on the optical disk 2 is edited nondestructively, and a resultant file with downward compatibility is recorded on the optical disk 2 in accordance with a command issued by the user.

More specifically, in the present video disk apparatus 1, elementary streams DV and DA of video data and audio data input as real data from the imaging means are multiplexed by the file generator 15, and resultant multiplexed data is recorded in the form of a sequence of movie data atoms on the optical disk 2. When the real data is being recorded in the form of the sequence of movie data atoms, corresponding management information is sequentially acquired and stored in the memory 15A of the file generator 15. After the recording of the real data is completed, movie atoms are produced based on the management information stored in the memory 15A and recorded on the optical disk 2.

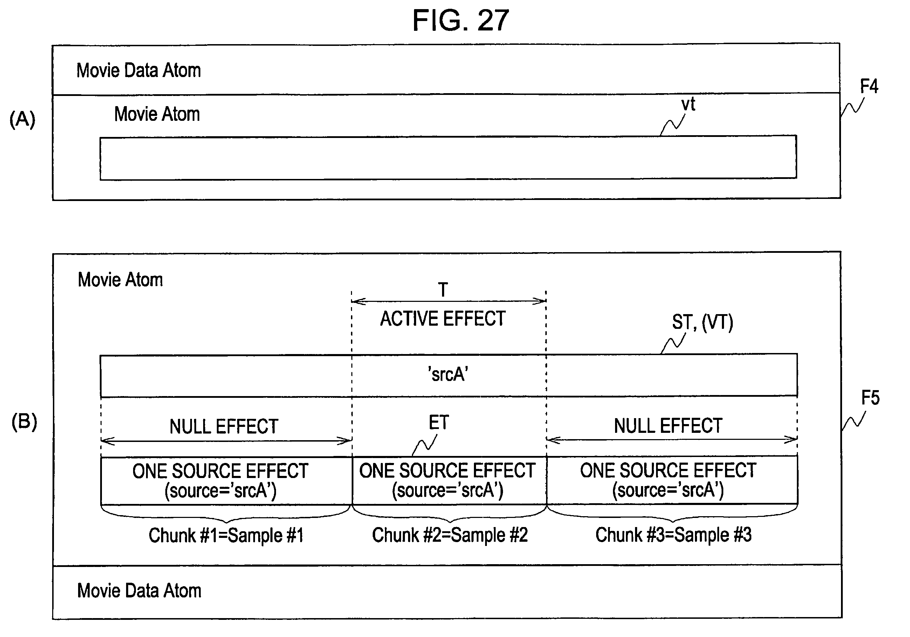

In the above process, the system control microcomputer 19 controls the general operation in terms of the recording of the movie data atoms and the movie atoms by controlling the operation of file generator 15 and processing the management information stored in the memory 15A by executing a particular processing procedure. Thus, in the video disk apparatus 1, as shown in Fig. 27, a QT file F4 is produced such that real data of video data and audio data obtained by taking a movie picture are recorded in a movie data atom, management information associated with the real data is recorded in a video track vt and an audio track (not shown) in a movie atom.

When editing is performed on the data recorded in the above-described manner on the optical disk 2, the system control microcomputer 19 displays a menu on a display screen (not shown) to allow the user to select a command from the menu and issue the selected command. Thus, the system control microcomputer 19 accepts various commands indicating, for example, an IN point, an OUT point, effects to be applied to the original data. If the user issues a command to record the edited data as a file on the optical disk 2, the system control microcomputer 19 records the file on the optical disk 2 in accordance with the command.

In the above-described process, the system control microcomputer 19 produces an effect track ET on the basis of the video track vt of the movie atom of the file F4 specified by the user as a file to be edited, and the system control microcomputer 19 produces a file F5 in the external reference form including the effect track ET such that the effect track ET points to the movie data of the original file F4.

More specifically, the system control microcomputer 19 makes a copy of the track atom of the video track vt of the file F4 and records the copy as a video track VT on the optical disk 2. In accordance with a command issued by a user, an effect track ET including null effects having no actual effect and an active effect that will result in an actual effect is formed in association with the video track VT, and the video track VT is specified as the source track ST pointing to video data to be subjected to the effect process according to the effect track ET.

For example, if the user issues a command to apply a filtering effect in a period T, this period T is set as an active effect period, and periods for which no effects are specified are set as null effect periods. Furthermore, as shown in Fig. 11, an entry is produced in a sample description atom for an active effect sample and also for a null effect sample, and an effect track is produced such that the active effect and the null effect are described in the respective entries. A track input map atom and a track reference atom are set so as to specify the video track as the source track.

Thus, when editing in terms of a one-source effect such as that described above is performed, the system control microcomputer 19 produces the file F5 as a result of editing so that playback can be accomplished by handling only two tracks, that is, the source track and the effect track. This allows a reduction in processing load necessary in the playback operation.

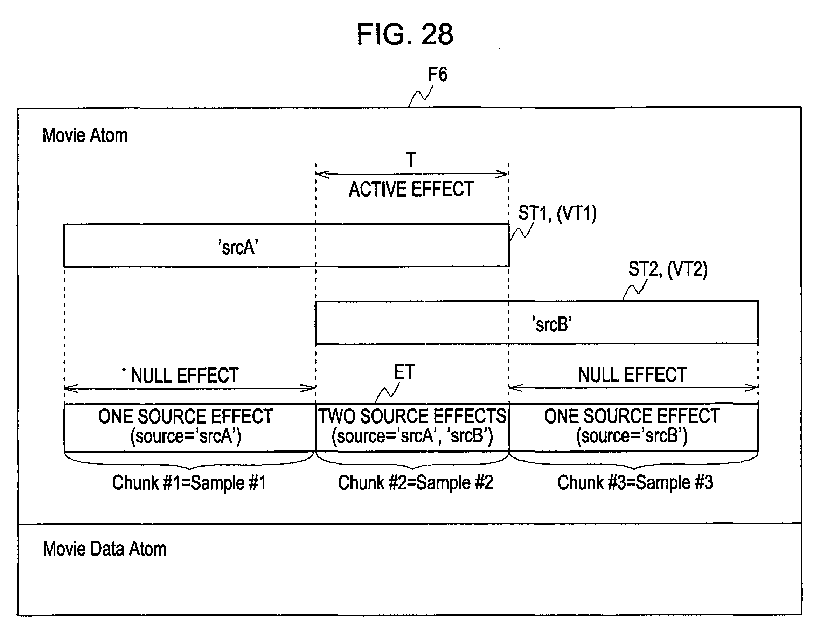

On the other hand, when a user issues a command to apply a two-source effect, the system control microcomputer 19 produces a file F6 including an active effect track, a null effect track, and a source track in accordance with the edit command, as shown in Fig. 28. More specifically, track atoms of two video tracks VT1 and VT2 to be subjected to the two-source effect are produced by making copies, an active effect period T, during which the effect should be subjected to the video tracks VT1 and VT2, are set in accordance with an IN point and an OUT point specified by the user, and periods for which no effects are specified are set as null effect periods.

Furthermore, as shown in Fig. 12, an entry is produced in a sample description atom for an active effect sample and also for a null effect sample, and an effect track is produced such that the active effect and the null effect are described in the respective entries. The setting in terms of the null effect associated with the two-source effect is made in a similar manner to the null effect associated with the one-source effect. In this specific example, in the first null effect sample in the effect track, ST1 is specified as the source track, and ST2 is specified as the source track in the null effect sample following the active effect period. Furthermore, a track input map atom and a track reference atom are set so as to specify the video tracks VT1 and VT2 respectively as the source track ST1 and ST2.

Thus, when editing in terms of a two-source effect such as that described above is performed, the system control microcomputer 19 produces the file F6 as a result of editing so that playback can be accomplished by handling only three tracks, that is, the two source tracks ST1 and ST2 and one effect track. This allows a reduction in processing load necessary in the playback operation.

In the setting of such a null effect, the system control microcomputer 19 sets the parameter flag (Fig. 18) so that it is possible to identify whether an entry of interest is of a null effect or an active effect only based on management information of the movie atom without having to refer to the parameter value in the movie data atom. In the playback operation, the system control microcomputer 19 detects the null effect based on the parameter flag, and properly handles the null effect without having to detect the corresponding parameter. This allows a reduction in processing load necessary in the playback operation.

While the system control microcomputer 19 makes the setting such that the null effect can be handled based on the parameter flag as described above, the system control microcomputer 19 forms an effect sample by employing a standard effect name (for example, Brightness and Contrast (brco) and properly setting parameters (for examples such that Brightness = 0 and Contrast = 0). Thus, the edited files F5 and F6 can be played back without a problem even by a conventional QT file processing application that does not have the capability of handling the null effect only based on the parameter flag.

Of various entries, the active entry is treated by the system control microcomputer 19 such that the effect type is set in accordance with the effect type selected by the user. In the case in which the effect type is an original effect defined by the manufacturer of the video disk apparatus 1, the effect type is set as the user defined effect, and furthermore, the detailed effect type is set by describing the owner ID and the effect ID in the extension field. Thus, in the present embodiment, it is possible to implement various effects in a very flexible manner.

However, even when the effect track is produced in the above-described manner, it is still difficult for a device to play back the edited data, if the device is incapable of interpreting and processing the effect described in the effect track. Furthermore, in the case in which the effect described in the effect track is a special effect defined by the manufacturer associated with the owner ID and the effect ID, it is difficult to play back the data by an optical disk apparatus produced by another manufacturer or by a QT player implemented on a computer using a QT file playback program.

To avoid the above problem, in accordance with a command issued by a user, the system control microcomputer 19 records the file including the effect track produced in the above described manner on the optical disk 2 in a form in which downward compatibility is achieved.

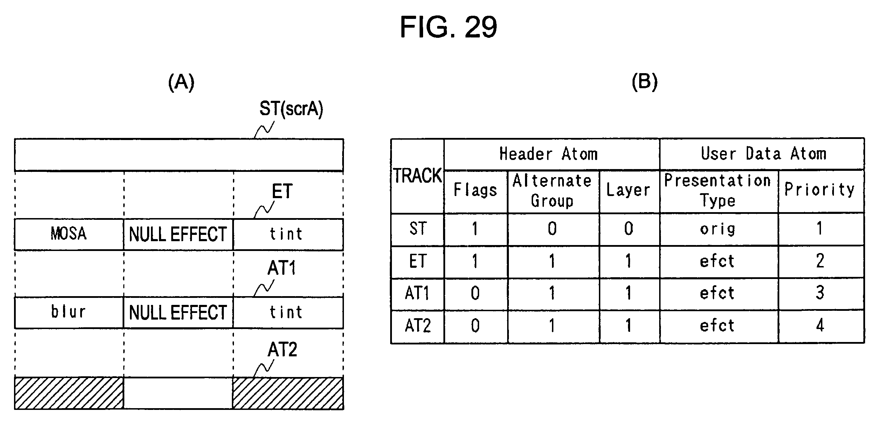

In the downward compatibility file, as shown in Fig. 29, first and second alternate tracks AT1 and AT2 for a source track ST and an effect track ET in accordance with a predetermined setting or in accordance with a command issued by the user. The first alternate track AT1 is provided for use by a playback apparatus which has the capability of processing some effects but is not capable of processing all effects settable in the video disk apparatus 1. That is, the system control microcomputer 19 produces an effect track that allows it to achieve an effect similar to the effect that is difficult for the playback apparatus to process, and the system control microcomputer 19 specifies this effect track as the first alternate track AT1.

For such an effect for which an alternate track should be provided, a type name expressed in four upper case characters (Fig. 15) assigned in advance or selected by a user is employed. In this specific example, the first alternate track AT1 is formed such that the mosaic (MOSA) effect described in the effect track ET is replaced with the blur effect and the alternate track AT1 includes three samples of blur, null, and tint, and parameters associated with these three samples are described in the media data atom.

On the other hand, the second alternate track AT2 is provided for use by a playback apparatus that does not have the capability of processing any effect. The system control microcomputer 19 produces the alternate track AT2 by sequentially playing back the video data corresponding to the source track ST, applying the effect to the video data by using the effect addition circuit 35 in accordance with the description in the effect track ET, compressing the video data output as a result of the effecting process from the effect addition circuit 35, and recording the resultant video data on the optical disk 2. In the example shown in Fig. 29, the alternate track AT2 is produced such that the video data obtained as a result of applying the specified effect is recorded in the mosaic and tint periods, and, in the null period, video data of the source track in the corresponding period is recorded. The resultant video track subjected to the effect process and recorded on the optical disk 2 in the above-described manner is set as the second alternate track AT2 by the system control microcomputer 19. Thus, the system control microcomputer 19 produces a plurality of alternate tracks such as alternate tracks AT1 and AT2 so that the file can be handled by a wide variety of apparatus which are different in processing power.

Thus, in the present embodiment, when the QT file is played back by the same video disk apparatus 1 as that which has produced the QT file, the edited video data can be played back by processing the source track ST and the effect track ET. On the other hand, when the QT file is played back by an apparatus or a system which has lower capability than that of the video disk apparatus 1 and thus is incapable of processing the effect track ET, the edited video data is played back by processing the alternate track AT1 or AT2 instead of the effect track ET. When the QT file is played back by an apparatus or a system which does not have the capability of processing any effect and thus is incapable of processing the effect track ET and the alternate track AT1, the edited video data is played back by processing the second alternate track AT2.

When the system control microcomputer 19 has produced the plurality of alternate tracks AT1 and AT2 in the above-described manner, the system control microcomputer 19 describes the relationship between the effect track ET and the alternate tracks AT1 and AT2 by setting the flag, the alternate group, and the layer in the track header atom of the effect track ET and the alternate tracks AT1 and AT2 such that the flag of the effect track ET is set to 1, the flag of the alternate tracks AT1 and AT2 is set to 0, and the alternate group is set to the same value of 1 for all tracks, that is, the effect track ET and the alternate tracks AT1 and AT2. In this specific example, the value of the layer has no influence on the playback operation, and thus the layer is set to a predetermined arbitrary value.

On the other hand, the presentation type in the user data atom is set such that a character string of "orig" is set for the source track ST but a character string of "efct" is set for the other tracks, that is, the effect track ET and the alternate tracks AT1 and AT2.

The priority is set such that the highest priority is given to the source track ST and the priority is reduced in the order the effect track ET, the first alternate track AT1, and the second alternate track AT2.

Thus, in the present embodiment, a description is made in the QT file that the QT file should be process such that when the QT file is played back by an apparatus or a system which has lower capability than that of the video disk apparatus 1 and thus is incapable of processing the effect track ET, the alternate track AT1 should be processed in preference to the alternate track AT2.

In the example shown in Fig. 29, the alternate tracks are provided for the one-source effect. For a two-source effect, a first and second alternate tracks can be provided in a similar manner.

If a command is issued to play back a QT file edited by setting an effect track in the above-described manner, the system control microcomputer 19 controls the playback system such that data described in a movie atom are sequentially read from the QT file specified by a user, and a movie data atom is played back in accordance with the data described in the movie atom.

In the playback operation, if the QT file specified to be played back is an edited file, the system control microcomputer 19 plays back the source track based on the data described in the track reference atom and the track input map atom of the effect track. In this process, if the QT file includes, in addition to a full original video track, a source track produced by copying a part of the original video track in a period in which a one-source effect or a two-source effect should be applied, as shown in Figs. 1 and 2, the video track, the source track, and the effect track are handled in accordance with the data described in the edit atom of each track atom, and the video data of the source track is subjected to the effect process according to the effect track. By switching the layer between video data of video tracks, it is possible to playback the vide data of the QT file in the conventional form such that the video data of the original video track is displayed on the top of the screen in any period other than active effect periods, and the video data obtained by performing the effect process on the source track according to the effect track is displayed on the top of the screen during active effect periods.

On the other hand, in the case in which an original video track is recorded in a source track and an effect track including a null effect and an active effect is formed as is the case with the QT file shown in Fig. 27 or 28, the video data is output while applying the active effect and the null effect recorded in the effect track to the video data read from the source track. Thus, use of the QT file according to the present embodiment of the invention makes it possible to playback an edited result by handling only two tracks for a one-source effect or only three two track for a two-source effect. In contrast, in the case of a QT file in the conventional form, it is needed to handle as many tracks as three tracks or five tracks to playback an edited result with a one-source effect or a two-source effect. Thus, it is possible to reduce the processing load imposed on the playback system or the system control microcomputer 19 during the playback operation.

In processing associated with a null effect or an active effect, the system control microcomputer 19 determines whether the sample description atom of the effect track includes an extension field (stream descriptor atom), and, if it is determined that the sample description atom includes an extension field, the system control microcomputer 19 detects the value of the parameter flag set in the extension field and determines whether an effect of interest is set to be active or null, based on the value of the parameter flag. In a case in which the effect of interest is set to be active, the data of the parameter associated with the effect to be applied to the real data recorded in the movie data atom is read, and the effect is processed in accordance with the parameter. On the other hand, in a case in which the effect of interest is set to be null, the video data recorded in the source track is directly played back without reading the parameter.

Thus, in the present video disk apparatus 1, as described above, when an effect of interest is set to be null, a parameter associated with this null effect set in a movie data atom is not read, and any processing based on this parameter is not performed. Thus, a reduction in processing load is achieved.

Even in the case in which it is determined based on the parameter flag that the effect of interest is determined to be active and thus the corresponding parameter is read from the movie data atom, if the parameter is set to a value that does not cause the effect to create any change, the effect of interest is regarded as equivalent to a null effect and video data is played back from the source track. Even in the case in which no parameter flag is set in an extension field, if a null effect and an active effect are set in an effect track corresponding to a video track (formed as a source track), it is possible to minimize the number of tracks to be handled, and thus it is possible to minimize the processing load.

Thus, when a given QT file is a file according to the conventional QT format including no extension field, the system control microcomputer 19 reads a corresponding parameter and processes the effect in accordance with the parameter as in the case in which it is determined based on the parameter flag that the effect is set to be active.

When an effect specified in an effect track is applied to video data depending on the type of the effect, if the effect type is the user defined effect type, the system control microcomputer 19 detects the owner ID and the effect ID described in the extension field. If the video disk apparatus 1 does not have the capability of handling the effect identified by the detected owner ID and effect ID, the system control microcomputer 19 may regard the effect as a null effect and may directly output the video data without applying any effect to the video data. On the other and, when the video disk apparatus 1 has the capability of handling the effect identified by the detected owner ID and effect ID (the capability may be provided to the video disk apparatus 1, for example, by preinstalling a program module for processing the effect in the video disk apparatus 1), the effect identified by the detected owner ID and effect ID is applied to the video data and the resultant processed video data is output.

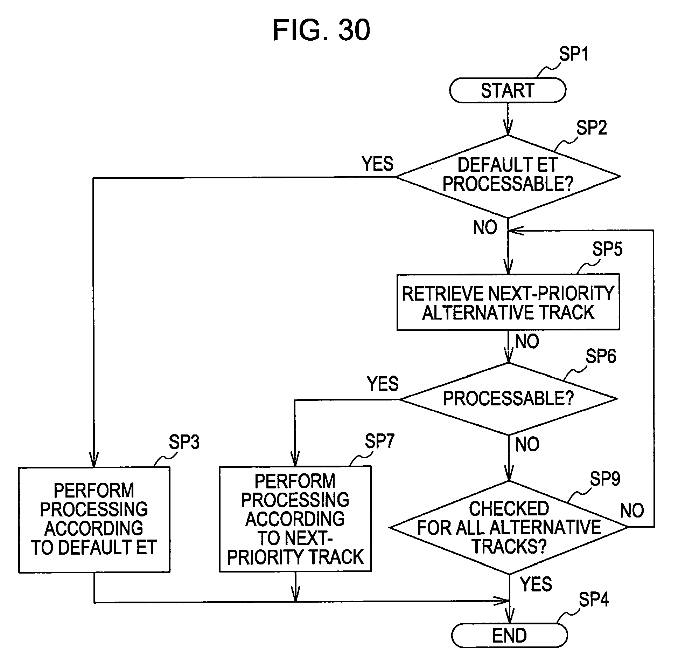

The flow of the process associated with the effect track ET performed by the system control microcomputer 19 is shown in Fig. 30. When a user issues a command to play back a QT file including an effect track ET, the system control microcomputer 19 starts the process from step SP1. In step SP2, the system control microcomputer 19 determines whether it is possible to process an effect described in a default effect track (an effect track whose corresponding flag is set to 1). If the answer to step SP2 is affirmative, the process proceeds to step SP3 from SP2. In step SP3, a general operation setup is performed such that the effect described in the default effect track ET will be applied when the QT file is played back. Thereafter, the process proceeds to step SP4 in which the process is completed.

On the other hand, in the case in which the answer to step SP2 is negative, the process proceeds to step SP5 from SP2. In step SP5, the system control microcomputer 19 detects alternate tracks AT1 and AT2, based on the value set in the alternate group. The system control microcomputer 19 then checks the priority assigned to each alternate track to detect an alternate track with next highest priority.

The system control microcomputer 19 determines whether it is possible to process the effect described in the detected alternate track with next highest priority. If the answer affirmative, the process proceeds to step SP7 from SP6. In step SP7, a general operation setup is performed such that the effect described in the alternate track with next highest priority will be applied when the QT file is played back. Thereafter, the process proceeds to step SP4 in which the process is completed. In this case, the system control microcomputer 19 applies the effect described in this alternate track instead of the effect described in the default effect track ET to the video data read from the source track ST.

On the other hand, when the answer to step SP6 is negative, the process proceeds to step SP9 from SP6. In step SP9, the system control microcomputer 19 determines whether the process is completed for all alternate tracks belonging to the same alternate group. If the answer is negative, the process returns from step SP9 to SP5, the process described above is performed for an alternative track with further lower priority. On the other hand, if the answer to step SP9 is affirmative, the process proceeds to step SP4 from SP9. In step SP4, the system control microcomputer 19 informs the user that the present file cannot be played back. Thereafter, the process is ended. If the QT file includes an alternate track in which a result of applying an effect to a video track is recorded, the video data with the effect can be played back by reading the alternate track even by an apparatus which does not have the capability (such as the capability of the video disk apparatus 1) of processing effects. Therefore, the affirmative answer to step SP9 can occur when the QT file includes a special effect defined by another manufacturer and does not include an alternate track in which a result of applying the special effect to a video track is recorded.

### (2) Operation of Embodiment

In the video disk apparatus 1, as described above, a video signal DV1 acquired via the imaging means is compressed by the video encoder 11, and the resultant compressed video signal is input at a variable rate to the file generator 15. Meanwhile, an audio signal DA1 acquired via a microphone or the like is compressed by the audio encoder 12, and the resultant compressed audio signal is input to the file generator 15. The file generator 15 converts the video signal and the audio signal into a QT file. The QT file is then recorded on the optical disk 2 via the following process.

In the process performed by the file generator 15, the video data and the audio data are reconstructed in the form of a set of samples and a set of chunks. The video data is interleaved in units of chunks and output in the form of a movie data atom. The output video data is recorded on the optical disk 2. While sequentially processing the video data and the audio data in the above-described manner, information necessary to play back each sample and each chunk is acquired and stored as management information in the memory 15A. When recording of the real data in the form of the movie data atom is completed, the data of the management information in the form of a movie atom is output from the memory 15A to the recording means. Thus, the video data and the audio data are recorded as the QT file on the optical disk 2. Meanwhile, management information for managing the video data and the audio data, which are real data in the form of the movie data atom in the recorded QT file, is created in the hierarchical form, and a video track of management information associated with the video data and an audio track of management information associated with the audio data are formed in a movie atom.

If a user issues a playback command, the QT file recorded on the optical disk 2 is played back under the control of the system control microcomputer 19 as follows. That is, the data of the movie atom is read from the optical disk 2, and the data of the movie data atom is sequentially read from the optical disk 2 in accordance with the management information described in the movie atom. The data of the movie data atom is decoded into the original video data and audio data, and the resultant decoded video data and audio data are output from the video decoders 13A and 13B and the audio decoder 14. Thus, the original video data and audio data obtained as a result of taking a movie and recorded on the optical disk 2 are played back. Herein, it necessary, editing is performed on the original video data and audio data on the video disk apparatus 1.

If the user issues a command to edit the video data recorded as the QT file, the movie atom of the QT file to be edited is read out and a video track is formed by making a copy of a part, to be edited, of the track atom of video in the movie atom. In this case, the video track also serves as a source track. In this video track, an absolute path is described so as to point to the real data of the corresponding video data in the original QT file, and a QT file is created in the external reference form in which the movie data atom of the original QT file is referred to.

Furthermore, in this QT file including the copied video track, an effect track is formed in accordance with an IN point and an OUT point specified by the user. In this effect track, a null effect having no effect on the video track and an active effect having an effect on the video track are set in accordance with a command issued by the user. Furthermore, the copied video track is specified as the source track.

When a file according to the conventional QT format is played back, it is necessary to handle an original video track, a source track, and an effect track. In contrast, when the QT file created in the above-described form is played back by the video disk apparatus 1, it is possible to play back the QT file only by handling the effect track and the source track set as serving as a source for the effect. Thus, a reduction in the processing load needed to play back the edited video data is achieved.

That is, in the effect track, the track reference atom and the track input map atom are described so as to point to the source track, and the sample description atom is described so as to identify effect types of all effects including null effects. Furthermore, in accordance with the setting described in the sample description atom in the effect track, parameters of the respective effects are assigned to the movie data atom of the edited QT file.

In the case in which the effect is a one-source effect, the effect track ET is created such that one source track ST is pointed to, and execution of processing is specified as to null effects associated with the one-source effect and an active effect associated with the one-source effect (Fig. 11). On the other hand, when the effect is a two-source effect, the effect track ET is created such that two source tracks ST1 and ST2 are pointed to, and execution of processing is specified as to null effects associated with the one-source effect and an active effect associated with the two-source effect (Fig. 12).

In the playback operation, when the effect is a one-source effect (Fig. 27), while the sequence of video data specified by the source track is played back, the played-back video data is subjected to the null effect process and the result is output. In the active effect period T, the video data read in accordance with the source track is subjected to the active effect process, and the result is output. Thus, it is possible to play back the edited video data by handling only two tracks.

In the case of a two-source effect (Fig. 28), video data specified by two source tracks are played back in the order specified in the editing process, and one of video data is output via the null effect process in periods other than the active effect period T. In the transition period T, the two video data are subjected to the active effect process and the result is output. Thus, in this case, the edited video data can be output by handling three tracks.

In the video disk apparatus 1, when the effect track is created in the above-described manner, an extension field associated with the corresponding effect is created, and identification flags associated with the null effect and the active effect are set in the created extension field. When the edited QT file produced in the above-described manner is played back in accordance with the identification flags, the null effect can be processed without having to acquire the parameter of the real data set in the movie data atom, and it is not needed to perform calculation associated with the effect. This makes it possible to omit reading the parameter from the movie data atom and performing processing associated with the parameter, and thus it is possible to reduce the processing load needed in playing back the edited QT file.

That is, in the video disk apparatus 1, in the playback operation, if the active effect is detected based on the identification flag set in the extension field, the real data of the movie data is accessed to acquire the parameter associated with this active effect. The effect defined in the entry is applied to the video data according to the acquired parameter, and the resultant processed video data is output. On the other hand, in this playback operation, when the null effect is detected based on the identification flag set in this extension field, accessing to the real data of the movie data atom is stopped, and the video data associated with the null effect is directly output without processing the video data.

In contrast, when a file in the conventional QT file formation including no extension field is played back, the effect type is detected, and the parameter is acquired from the movie data atom, the corresponding video data is processed, and the result is output in a similar manner to the conventional playback technique.

In the case in which the QT file includes an original effect specific to the video disk apparatus 1, the effect type filed in the entry of the effect is described to indicate that the effect is of the user defined effect type, and the owner ID and the effect ID are described in the extension field to indicate the detailed effect type. Thus, in the present embodiment, it is possible to implement various effects developed by a manufacturer by using the QT format.

However, when the QT file includes an effect defined by another manufacturer using an owner ID and an effect ID, it is impossible for the video disk apparatus 1 to play back the QT file. Conversely, the QT file edited using the video disk apparatus 1 cannot be played back by another video disk apparatus or a computer.

To avoid the above problem, a user may issue a command to record the QT file in the form with downward compatibility (Fig. 29). In response to the command, the video disk apparatus 1 creates an alternate track AT1 by replacing a special new effect or an effect specific to the video disk apparatus 1 with a similar existing effect. Furthermore, the user defined effect described in the effect track ET is performed on the data played back from the source track ST, and the resultant processed video data is recorded in an alternate track AT2. These alternate tracks AT1 and AT2 and the effect track ET are set so as to belong to the same alternate group, the flags are set so as to indicate the status of the alternate tracks AT1 and AT2 and the effect track ET, the priority is set in the user data atom to indicate the priority of these tracks, and the presentation type is set so as to indicate that the alternate track AT2 is a track in which real data of video data is recorded in a similar manner to the source track ST, but the alternate track AT2 provides the video data subjected to the effect process when it is used instead of the effect track ET. Thus, the video disk apparatus 1 creates the alternate tracks AT1 and AT2 in the above-described manner and records the resultant nondestructively edited data on the optical disk 2.

Thus, the video disk apparatus 1 is capable of editing given video data in a nondestructive manner and recording the resultant edited data on the optical disk 2, in the form that allows wide variety of apparatus or systems having different processing capabilities to play back.

For example, when a QT file to be played back is a file recorded using the present video disk apparatus 1, the video data specified by the source track ST is read and processed according to the effect track ET, and the resultant edited video data is presented to a user.

On the other hand, when a QT file produced using the present video disk apparatus 1 is played back using a computer, if an effect track ET specified by the flag and the alternate group is processable by the computer, the video data specified by the source track ST is read and processed in accordance with the effect track ET, and the resultant edited video data is presented to a user. However, when the effect track ET is not processable by the computer, the edited result of the QT file is played back using either the alternate track AT1 or AT2 and presented to the user. Note that the QT file does not include information indicating which one of a plurality of alternate tracks should be selected by a QT file player installed on the computer. Thus, the determination as to which one of the plurality of alternate tracks is selected depends on the setting of the QT file player installed on the computer. However, in practice, when the computer is not capable of processing the effect track ET which should be used if the computer is capable of processing it, it is possible to upgrade the QT file player installed on the computer to a newer version capable of processing such an effect track. Thus, it becomes possible to play back the QT file using the effect track ET without using the alternate tracks.

When the QT file produced by the video disk apparatus 1 is played back using another video disk apparatus, or when an optical disk recorded using another video disk apparatus is played back using the present video disk apparatus 1, if the effect track ET is processable, the data read from the source track ST is subjected to the effect process according to the effect track ET, and the result is presented to a user.

However, when the effect track includes an effect that is difficult to process, the video disk apparatus 1 selects an alternate track AT1 specified in the priority field as having next highest priority, processes the data read from the source track ST in accordance with the alternate track AT1 instead of the effect track ET, and presents the result to a user. In this case, the user can enjoy the resultant video subjected to the effect process performed by the playback apparatus, although the effect is not perfectly equal to the effect intended by the producer of the QT file.

When even the alternate track AT1 is difficult to process, an alternate track AT2 with lower priority is selected. Because, in this alternate track AT2, video data obtained as a result of applying the effect to the real data corresponding to the source track ST is recorded, that is, video data equivalent to the result obtained by applying the effect track to the real data corresponding to the source track ST is recorded, it is possible for an even playback apparatus incapable of processing any effect to play back the QT file. Thus, downward compatibility is perfectly achieved.

In addition to such the alternate track that allows the even playback apparatus incapable of processing any effect to play back the QT file, the video disk apparatus 1 also produces an alternate track in a form in which the effect type is replaced by another effect type, and sets the priority to each of the plurality of alternate tracks. This makes it possible to provide, to a user, a result of the effect according to the alternate track in which the effect type is changed to another effect type in preference to the alternate track that causes a reduction in picture quality to occur when an extra encoding/decoding process is performed.

In the present embodiment, priorities for the effect track and alternate tracks are determined in accordance with required processing power, and thus the second alternate track in which the result obtained by processing the video data according to the effect track is recorded is assigned the lowest priority. Thus, the alternate track having the risk of degradation in picture quality due to the repetition of the process including the data compression and decompression is assigned the lowest priority thereby minimize the probability that degradation in picture quality occurs.

### (3) Advantages of Embodiment

According to the present embodiment of the invention, as described above, at least an alternate track including video data equivalent to video data obtained by performing a process according to an effect track is formed, and the processing priority level for the alternate track is defined thereby making it possible to provide to a user the result of the effect process using the alternate track including the video data even when an apparatus used to play back the video data does not have the capability of processing the effect. Thus, it is possible to provide to a user the result of the effect process regardless of a difference in processing capability among apparatus.

By providing an alternate track including an effect which is an alternative of the effect described in the effect track, in addition to the alternate track including the video data, it becomes possible for an apparatus or a system having the capability of processing the alternative effect to provide to users the result of application of the alternative effect to the video data, which is higher in picture quality than the result given based on the alternate track including the video data.

By describing the priority of the alternate track in the block of the user data of the QT file, it becomes possible to provide the result of application of the effect to users regardless of a difference in processing capability among apparatus used.

In the playback operation, a processable alternate track is detected based on the priority level, the QT file is played back using the detected alternate track. Thus, it is possible to provide the result of application of the effect to users regardless of a difference in processing capability among apparatus used.

### (4) Embodiment 2

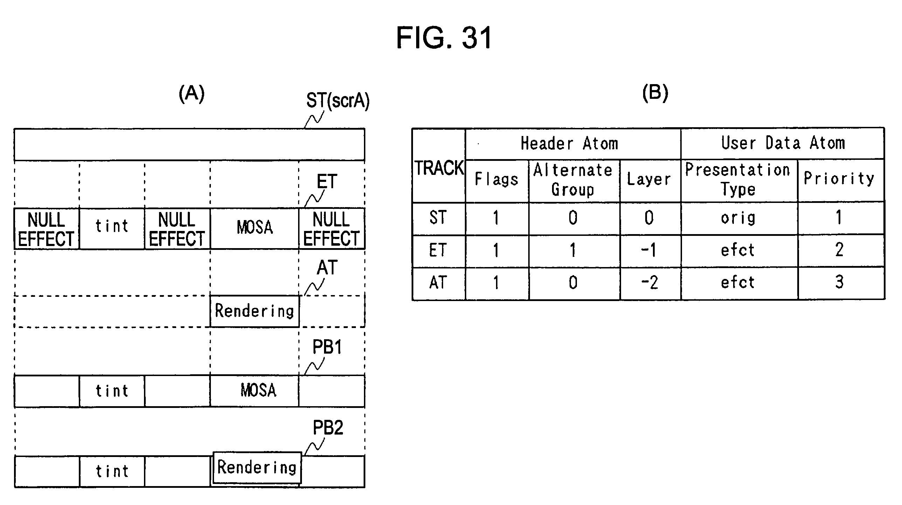

Fig. 31 is a diagram comparative to Fig. 29 and showing an alternate track created by an video disk apparatus according to an second embodiment of the present invention. In this embodiment, a track produced as a result of applying an effect to video data according to an effect track ET is recorded as an alternate track AT. In this alternate track AT, real data of video data is recorded only in the period in which the effect described in the effect track ET can cause a change to occur in the video data. Furthermore, in this period, real data of video data is recorded only for mosaic (MOSA) which is highly likely to be difficult to process for the conventional QT player. Thus, in the present embodiment, it is possible to achieve downward compatibility using a less file size than is needed in the first embodiment.

Accordingly, the flag is set to 1 for all of the source track ST, the effect track ET, and the alternate track AT, and only the effect track ET is set to belong to the alternate group. The priority is set such that higher priority is given in the order the source track ST, the effect track ET, and the alternate track AT. The layer is set such that a higher level is assigned in the order the alternate track AT, the effect track ET, and the source track ST.

When a QT file in which tracks are recorded in the above-described manner is played back, the effect track or the alternate track is processed in accordance with the setting of the flag. In this playback operation, when it is difficult to process the effect track, the result of applying the effect is provided to a user by using the alternate track.

That is, for the QT file recorded using the present video disk apparatus, as represented by a reference symbol PB1, the video data read from the source track ST is processed in accordance with the effect track ET, and the result is presented to a user.

Note that the flag is set to 1 for all the source track ST, the effect track ET, and the alternate track AT. Therefore, for example, when it is difficult for the present video disk apparatus to process the mosaic effect, the source track ST, the effect track ET, and the alternate track AT are all processed concurrently. As a result, as represented by reference symbol PB2, the playback process is performed in accordance with the effect track immediately before the mosaic process and the result of the processing according to the effect track is presented to a user. In the mosaic period, because a smaller layer value is assigned to the alternate track than the layer value assigned to the effect track, the result of playback according to the alternate track is presented to the user. After this period, there is no video data corresponding to the alternate track AT, and thus the result of the process according to the original effect track is presented to the user.

On the other hand, when the QT file is processed by a computer, the computer cannot interpret the priority set in the priority field, and thus the playback operation is performed only in accordance with the setting of the flag and the alternate group. As a result, the result of the process performed in a similar manner as described above with reference to symbol PB2 is presented to the user. In this case, if the apparatus or the system used to playback the QT file does not have the capability of processing effects, it is impossible to present the result of the effect process to the user.

In the present embodiment, because real data of video data is assigned only to a period in which the video data is changed according to the effect track, similar advantages to those obtained in the first embodiment can be achieved using a less file size.

### (5) Embodiment 3

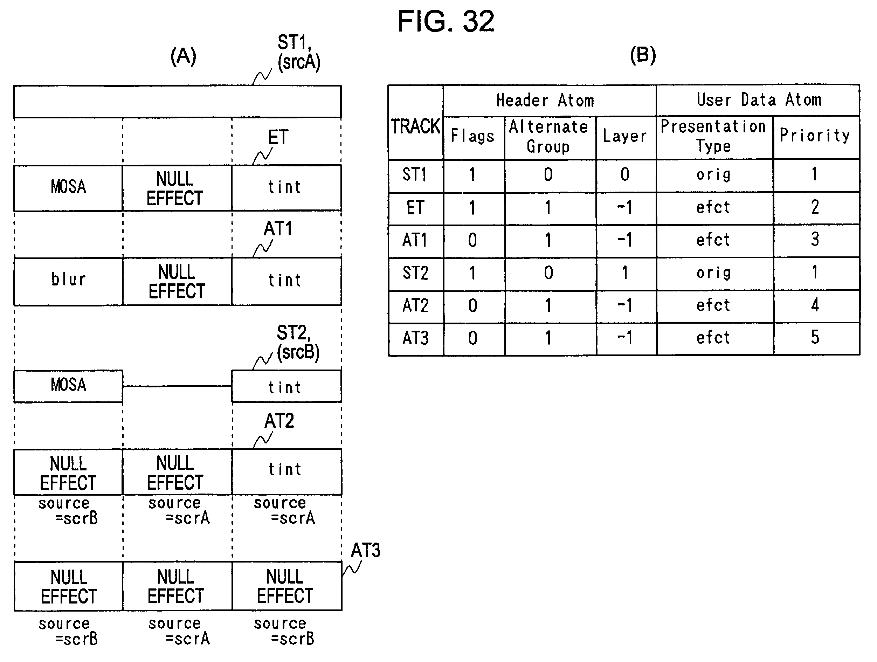

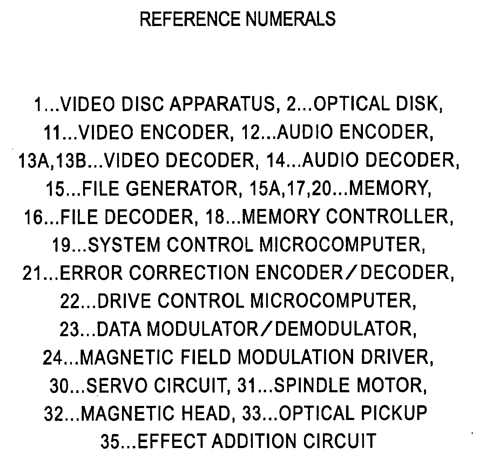

Fig. 32 is a diagram comparative to Fig. 29 and showing an alternate track created by an video disk apparatus according to an third embodiment of the present invention. In this embodiment, a track of video data obtained as a result of applying an effect described in an effect track ET on video data of an original source track ST1 is formed as a second source track ST2, and a second effect track indicating an effect to be applied to this source track is formed as an alternate track.

For example, in the present embodiment, when there is an effect track including a mosaic (MOSA) effect, a null effect, and a color tint effect to be sequentially applied to video data read according to the first source track ST1, a first alternate track AT1 is formed by replacing the mosaic (MOSA) effect with a blur effect. Furthermore, a source track ST2 is formed so as to include video data obtained as a result of applying the above sequence of effects including the mosaic (MOSA) effect, the null effect, and the color tint effect to the original video data. In the null effect period, no video data is assigned to the source track ST2. This allows a reduction in the file size of the QT file.

An second alternate track AT2 is then formed which first causes a null effect process to be performed on the video data of the source track ST2 subjected to the mosaic (MOSA) effect process, and then causes a sequence of effects including a null effect and a color tint effect to be performed on video data read according to the original source track ST1. Furthermore, a third alternate track AT3 is formed which first causes a null effect process to be performed on the video data of the source track ST2 subjected to the mosaic (MOSA) effect process, then causes a null effect process to be performed on the video data of the original source track ST1, and finally causes a null effect process to be performed on the video data of the source track ST2 subjected to the color tint process.

The flag is set to a value of 1 for the first and second source tracks ST1 and ST2 and the effect track ET, and to a value of 0 for the other tracks. The alternate group is set to a value of 1 for the effect track ET and the first to third alternate tracks AT1 to AT3. The layer is set to a default value of 0 for the original source track ST1, a value of -1 for the effect track ET and the first to third alternate tracks AT1 to AT3 so that these tracks are displayed in a layer upper the layer of the source track ST1, and a value of 1 for the second source track ST2 so that this track is displayed in a layer lower than the layer of the original source track ST1.

The priority levels are set such that the highest priority level is assigned to the first source track ST1 and the priority level decreases in the order the first source track ST1, the second source track ST2, the effect track ET, the first alternate track AT1, the second alternate track AT2, and the third alternate track AT3.

That is, the processing priority levels for the effect track ET and the first to third alternate tracks AT1 to AT3 are set in the order in which the required processing power decreases from the highest to the lowest. On the other hand, the same displaying priority is assigned to the effect track ET and the first to third alternate tracks AT1 to AT3.

The playback process can be performed in a similar manner to the process shown in Fig. 30. That is, an processable effect track or alternative track is detected by sequentially checking the tracks in the order of the processing priority, and the source track ST1 or ST2 is processed in accordance with the detected processable track.

Thus, when the QT file recorded using the video disk apparatus according to the present embodiment, the result of playback of the first source track ST is processed according to the effect track ET, and the result is presented to a user. On the other hand, when this QT file is played back using a video disk apparatus incapable of processing the mosaic effect although capable of processing the other effects, the result of playback according to the first source track ST1 is processed according to the first alternate track AT1, and the result is presented to the user. In these cases, although video data of the second source track ST2 is played back, the result of the playback is not presented to the user because of the setting in terms of the layer.

In the case in which the video disk apparatus used is also incapable of processing the blur effect set in the first alternate track AT1, the second alternate track AT2 is selected. In this case, the video data of the second source track ST2 subjected to the mosaic process is first subjected to the null effect process, thereafter the video data of the first source track ST1 is subjected to the sequence of effects including the null effect and the color tint effect, and the result is presented to the user. When the video disk apparatus is incapable of processing even the color tint effect process set in the second alternate track AT2, the third alternate track AT3 is selected. In this case, the video data of the second source track ST2 subjected to the mosaic process is first subjected to the null effect process, thereafter the video data of the first source track ST1 is subjected to the null effect process, and finally the video data of the second source track subjected to the color tint process is subjected to the null effect process, and the result is presented to the user.

On the other hand, when the QT file is played back using a QT player running on a computer, if the QT player is incapable of processing the mosaic effect, one of the first to third alternate tracks AT1 to AT3 is selected, and the result of the process according o the selected alternate track is presented to a user. In this case, it is possible to upgrade the QT player to a version capable of handling the mosaic effect.

In the present embodiment, as described above, an extra source track is formed which includes video data obtained as a result of performing an effect process on original video data according to an effect track, and an alternate track is formed which includes management information of an effect to be applied to the extra source track thereby achieving advantages similar to those achieved in the previous embodiments.

### (6) Other Embodiments

In the embodiments described above, by way of example, the present invention is applied to specific effects such as the mosaic effect and the blur effect. The effects are not limited to those, but the present invention may also be applied to other effects.

In the embodiments described above, by way of example, the present invention is applied to a video disk apparatus designed to record/play back a QT file. The video disk apparatus is not limited to that of such a type, but the present invention may be applied to a wide variety of recording/playback apparatus designed to record/play back files in other formats such as ISOBase Media file format (MPEG4-part12) based on the QT format, Motion JPEG2000 (MJ2) file format, AVC (Advanced Video Coding (MPEG4-part10)) file format, etc.

In the embodiments described above, by way of example, a QT file is recorded on an optical disk by using a video disk apparatus according to the present invention. However, the recording medium is not limited to the optical disk. The present invention may also be applied to other recording media such as a magnetic disk, a memory cord, etc.

In the embodiments described above, by way of example, the present invention is applied to a video disk apparatus. Note that the present invention may also be applied to a wide variety of apparatus such as a portable telephone or a PDA (Personal Digital Assistants) device capable of taking a movie, a server capable of recording video data received via a wireless/wired communication channel, various recording apparatus capable of recording video data, a personal computer capable of editing a video data file obtained as a result of taking a movie, etc.

### Industrial Applicability

The present invention can be used when a video data file in the QT format obtained as a result of taking a movie is edited or the edited QT file is played back.

## Claims

1. A file recording apparatus for editing video data in accordance with a command input by a user and recording the resultant edited video data in the form of a file,
the file including
a block of real data management information which is organized in a hierarchical structure and which includes at least a source track in which management information associated with the video data is described and an effect track in which management information associated with an effect to be applied to the video data is described, and
a block of real data including at least real data associated with the effect track,
the file recording apparatus forming, in the block of management information, at least
an alternate track including video data equivalent to video data obtained by performing a process according to the effect track, and
information indicating the processing priority level assigned to the alternate track of the video data with respect to the processing priority level assigned to another track.

2. The file recording apparatus according to Claim 1, wherein an alternate track for an alternative use of the effect track is formed in the block of management information, the alternate track including an effect which is an alternative to the effect described in the effect track.

3. The file recording apparatus according to Claim 2, wherein the information indicating the priority level is described in a block of user data of the alternate track including the video data and also in a block of user data of the alternate track for alternative use of the effect track.

4. The file recording apparatus according to Claim 3, wherein in the block of the user data, property information associated with the corresponding track is described.

5. The file recording apparatus according to Claim 1, wherein the alternate track including the video data is formed such that real data of the video that is assigned only in a period in which a change occurs in the video data when the effect track is applied to the video data.

6. The file recording apparatus according to Claim 1, wherein the alternate track including the video data is a track of management information associated with an effect to be applied to another source track including video data obtained as a result of applying the effect track to the original video data.

7. A file recording method including editing video data in accordance with a command input by a user and recording the resultant edited video data in the form of a file,
the file including
a block of real data management information which is organized in a hierarchical structure and which includes at least a source track in which management information associated with the video data is described and an effect track in which management information associated with an effect to be applied to the video data is described, and
a block of real data including at least real data associated with the effect track,
the file recording method including the step of forming, in the block of management information, at least
an alternate track including video data equivalent to video data obtained by performing a process according to the effect track, and
information indicating the processing priority level assigned to the alternate track of the video data with respect to the processing priority level assigned to another track.

8. A program for causing a computer to execute a file recording process including editing video data in accordance with a command input by a user and recording the resultant edited video data in the form of a file,
the file including
a block of real data management information which is organized in a hierarchical structure and which includes at least a source track in which management information associated with the video data is described and an effect track in which management information associated with an effect to be applied to the video data is described, and
a block of real data including at least real data associated with the effect track,
the program of the file recording process including the step of forming, in the block of management information, at least
an alternate track including video data equivalent to video data obtained by performing a process according to the effect track, and
information indicating the processing priority level assigned to the alternate track of the video data with respect to the processing priority level assigned to another track.

9. A storage medium in which a program for causing a computer to execute a file recording process is stored, the file recording process including editing video data in accordance with a command input by a user and recording the resultant edited video data in the form of a file,
the file including
a block of real data management information which is organized in a hierarchical structure and which includes at least a source track in which management information associated with the video data is described and an effect track in which management information associated with an effect to be applied to the video data is described, and
a block of real data including at least real data associated with the effect track;
the program of the file recording process including the step of forming, in the block of management information, at least
forming at least an alternate track including video data equivalent to video data obtained by performing a process according to the effect track, and
information indicating the processing priority level assigned to the alternate track of the video data with respect to the processing priority level assigned to another track.

10. A file playback apparatus adapted to play back video data recorded in the form of a file on a recording medium and output the resultant video data,
the file including
a block of real data management information which is organized in a hierarchical structure and which includes at least a source track in which management information associated with the video data is described, an effect track in which management information associated with an effect to be applied to the video data is described, and an alternate track including video data equivalent to video data obtained by performing a process according to the effect track, and information indicating the processing priority level assigned to the alternate track of the video data with respect to the processing priority level assigned to another track, and
a block of real data including at least real data associated with the effect track,
the file playback apparatus performing a process including the step of
detecting a processable alternate track in the order from the highest priority level to lower priority levels based on the information indicating the priority level and playing back the file using the detected alternate track.

11. A file playback method of playing back video data recorded in the form of a file on a recording medium and outputting the resultant video data,
the file including
a block of real data management information which is organized in a hierarchical structure and which includes at least a source track in which management information associated with the video data is described, an effect track in which management information associated with an effect to be applied to the video data is described, and an alternate track including video data equivalent to video data obtained by performing a process according to the effect track, and information indicating the processing priority level assigned to the alternate track of the video data with respect to the processing priority level assigned to another track, and
a block of real data including at least real data associated with the effect track,
the file playback method including the step of
detecting a processable alternate track in the order from the highest priority level to lower priority levels based on the information indicating the priority level and playing back the file using the detected alternate track.

12. A program for causing a computer to execute a file playback process including playing back video data recorded in the form of a file on a recording medium and outputting the resultant video data,
the file including
a block of real data management information which is organized in a hierarchical structure and which includes at least a source track in which management information associated with the video data is described, an effect track in which management information associated with an effect to be applied to the video data is described, and an alternate track including video data equivalent to video data obtained by performing a process according to the effect track, and information indicating the processing priority level assigned to the alternate track of the video data with respect to the processing priority level assigned to another track, and
a block of real data including at least real data associated with the effect track,
the program of the file playback process including the step of
detecting a processable alternate track in the order from the highest priority level to lower priority levels based on the information indicating the priority level and playing back the file using the detected alternate track.

13. A storage medium in which a program for causing a computer to execute a file playback process is stored, the file playback process including playing back video data recorded in the form of a file on a recording medium and outputting the resultant video data,
the file including
a block of real data management information which is organized in a hierarchical structure and which includes at least a source track in which management information associated with the video data is described, an effect track in which management information associated with an effect to be applied to the video data is described, and an alternate track including video data equivalent to video data obtained by performing a process according to the effect track, and information indicating the processing priority level assigned to the alternate track of the video data with respect to the processing priority level assigned to another track, and
a block of real data including at least real data associated with the effect track,
the program of the file playback process including the step of
detecting a processable alternate track in the order from the highest priority level to lower priority levels based on the information indicating the priority level and playing back the file using the detected alternate track.
